# EUROPEAN PATENT APPLICATION

(11) **EP 4 513 927 A1**
(43) Date of publication of application: **26.02.2025**
(21) Application number: 23845433.4
(22) Date of filing: 20.07.2023
(51) Int. Cl.: H04W 12/08

(54) **METHOD FOR ACCESSING WIRELESS LOCAL AREA NETWORK, DEVICE, SYSTEM, AND STORAGE MEDIUM**

(30) Priority: 26.07.2022 CN 202210887204
(71) Applicant: Huawei Technologies Co., Ltd., Shenzhen, Guangdong 518129 (CN)
(72) Inventor: GAO, Bo, Shenzhen, Guangdong 518129 (CN)
(74) Representative: Goddar, Heinz J.
(86) International application number: PCT/CN2023/108434
(87) International publication number: WO 2024/022222

(57) **Abstract**

This application relates to the field of wireless communication. This application provides a wireless local area network access method, a wireless local area network system, an electronic device, and a computer-readable storage medium. The wireless local area network access method includes: A configuration device determines a device trustlist; a first IoT device sends a first broadcast frame in an AP mode, where the first broadcast frame includes a first network identifier of a wireless local area network provided by the first IoT device; a mobile device receives the first broadcast frame, and sends a reply frame for the first broadcast frame to the first IoT device; the first IoT device switches from the AP mode to a STA mode in response to receiving the reply frame; the first IoT device sends a second broadcast frame, where the second broadcast frame includes a device identifier of the first IoT device; and the configuration device receives the second broadcast frame, determines that the device identifier of the first IoT device matches the device trustlist, and provides network configuration information of the wireless local area network for the first IoT device. In this application, network configuration efficiency in a batch network configuration scenario can be improved.

## Description

This application claims priority to Chinese Patent Application No. 202210887204.6, filed with the China National Intellectual Property Administration on July 26, 2022 and entitled "WIRELESS LOCAL AREA NETWORK ACCESS METHOD, DEVICE, SYSTEM, AND STORAGE MEDIUM", which is incorporated herein by reference in its entirety.

### TECHNICAL FIELD

This application relates to the field of wireless communication, and in particular, to a wireless local area network access method, a device, a system, and a storage medium.

### BACKGROUND

In a smart home scenario, home devices accessing a home local area network may be interconnected with each other and controlled in a unified manner by using a mobile device (for example, a mobile phone), to provide intelligent life experience for a user.

Currently, there are usually a plurality of home devices in a home. In some cases, network configuration needs to be performed on the plurality of home devices (that is, the plurality of home devices access a home local area network). Currently, a mainstream network configuration manner is a soft access point (a SoftAP network) manner. When batch network configuration is performed on the home devices in the SoftAP manner, the user needs to perform network configuration on the home devices one by one, which is cumbersome and time-consuming.

### SUMMARY

Some implementations of this application provide a wireless local area network access method, a wireless local area network system, an electronic device, and a computer-readable storage medium. The following describes this application from a plurality of aspects. The following implementations and beneficial effects of the plurality of aspects can be mutually referenced.

A first aspect provides a wireless local area network access method, applied to a system including a mobile device, a configuration device, and at least one IoT device, where the at least one IoT device includes a first IoT device. The method includes: The configuration device determines a device trustlist, where the device trustlist includes a device identifier of one or more IoT devices; the first IoT device sends at least one broadcast frame in an access point AP mode, where the at least one broadcast frame includes a first broadcast frame, and the first broadcast frame includes a first network identifier of a wireless local area network provided by the first IoT device; the mobile device receives the first broadcast frame, and sends a reply frame for the first broadcast frame to the first IoT device; the first IoT device switches from the AP mode to a station STA mode in response to receiving the reply frame; the first IoT device sends a second broadcast frame on at least one wireless channel, where the second broadcast frame includes a device identifier of the first IoT device, and the at least one wireless channel includes an operating channel of the configuration device; and the configuration device receives the second broadcast frame, determines, based on the second broadcast frame, that the device identifier of the first IoT device matches the device trustlist, and provides network configuration information of a wireless local area network in which the configuration device is located for the first IoT device, where the network configuration information is used by the first IoT device to access the wireless local area network.

According to the implementation of this application, the mobile device assists the IoT device in completing a mode switching stage of a network configuration process, and the configuration device assists the IoT device in completing a network configuration information obtaining stage of the network configuration process. Because different stages are performed with assistance of different devices, network configuration processes of different IoT devices may be performed in parallel, thereby improving network configuration efficiency in a batch network configuration scenario.

In addition, a difference from a SoftAP network configuration manner lies in that, in the implementation of this application, the configuration device performs identity authentication on the IoT device to be network-configured based on the device trustlist, thereby reducing user operations.

In some implementations, the at least one IoT device further includes a second IoT device. The method further includes: A second IoT device sends a third broadcast frame in the AP mode, where the third broadcast frame includes a first network identifier of a wireless local area network provided by the second IoT device; the first IoT device that has switched to the STA mode receives the third broadcast frame; and the first IoT device sends a reply frame for the third broadcast frame to the second IoT device, where the reply frame sent by the first IoT device for the third broadcast frame is used to trigger the second IoT device to switch from the AP mode to the STA mode.

According to the implementation of this application, in the batch network configuration process of the IoT devices, a plurality of links for mode switching are formed in a manner of mutual assistance between the IoT devices, so that network configuration efficiency can be significantly improved.

In some implementations, the first network identifier is a character string named according to a first rule, and the first network identifier includes a random character.

According to the implementation of this application, a malicious attack from another device can be mitigated.

In some implementations, the at least one broadcast frame further includes a fourth broadcast frame, the fourth broadcast frame includes a second network identifier of the wireless local area network provided by the first IoT device, the second network identifier is a character string named according to a second rule, and the second network identifier is used by the first IoT device to access the wireless local area network in a soft access point SoftAP manner.

In some implementations, that the mobile device receives a first broadcast frame includes: The mobile device performs wireless channel scanning to receive the first broadcast frame.

In some implementations, the reply frame sent by the mobile device for the first broadcast frame includes a first packet, and the first packet is a packet determined based on the first network identifier.

In some implementations, that the configuration device determines a device trustlist includes: The configuration device receives the device identifier of the one or more IoT devices that is sent by the mobile device, and determines the device trustlist based on the received device identifiers.

In some implementations, the second broadcast frame further includes an encryption parameter, and the encryption parameter is used by the first IoT device to perform key agreement with the configuration device.

In some implementations, that the configuration device provides network configuration information of a wireless local area network for the first IoT device includes: The configuration device determines an encryption key based on the encryption parameter in the second broadcast frame; and the configuration device encrypts the network configuration information based on the encryption key, and sends the encrypted network configuration information to the first IoT device.

In some implementations, the first broadcast frame is a beacon beacon frame; and/or the network configuration information of the wireless local area network includes a network identifier SSID of the wireless local area network; and/or the device identifier of the IoT device includes a MAC address of the IoT device.

A second aspect provides a wireless local area network access method, applied to a first IoT device. The method includes: sending at least one broadcast frame in an access point AP mode, where the at least one broadcast frame includes a first broadcast frame, and the first broadcast frame includes a first network identifier of a wireless local area network provided by the first IoT device; receiving a reply frame from a mobile device for the first broadcast frame, and switching from the AP mode to a station STA mode; sending a second broadcast frame on the at least one wireless channel, where the second broadcast frame includes a device identifier of the first IoT device, and the at least one wireless channel includes an operating channel of a configuration device; and receiving, from the configuration device, network configuration information in response to the second broadcast frame, where the network configuration information is used by the first IoT device to access a wireless local area network in which the configuration device is located.

According to the implementation of this application, the mobile device assists the IoT device in completing a mode switching stage of a network configuration process, and the configuration device assists the IoT device in completing a network configuration information obtaining stage of the network configuration process. Because different stages are performed with assistance of different devices, network configuration processes of different IoT devices may be performed in parallel, thereby improving network configuration efficiency in a batch network configuration scenario.

In addition, a difference from a SoftAP network configuration manner lies in that, in the implementation of this application, the configuration device performs identity authentication on the IoT device to be network-configured based on the device trustlist, thereby reducing user operations.

In some implementations, the method further includes: The first IoT device that has switched to the STA mode receives a third broadcast frame sent by the second IoT device in the AP mode, where the third broadcast frame includes the first network identifier of the network provided by the second IoT device; and sends a reply frame for the third broadcast frame to the second IoT device, where the reply frame sent by the first IoT device for the third broadcast frame is used to trigger the second IoT device to switch from the AP mode to the STA mode.

According to the implementation of this application, in the batch network configuration process of the IoT devices, a plurality of links for mode switching are formed in a manner of mutual assistance between the IoT devices, so that network configuration efficiency can be significantly improved.

In some implementations, the first network identifier is a character string named according to a first rule, and the first network identifier includes a random character.

According to the implementation of this application, a malicious attack from another device can be mitigated.

In some implementations, the at least one broadcast frame includes a fourth broadcast frame, the fourth broadcast frame includes a second network identifier of the wireless local area network provided by the first IoT device, the second network identifier is a character string named according to a second rule, and the second network identifier is used by the first IoT device to access the wireless local area network in a soft access point SoftAP manner.

In some implementations, the second broadcast frame includes an encryption parameter, and the encryption parameter is used by the first IoT device to perform key agreement with the configuration device.

A third aspect provides a wireless local area network access method, applied to a configuration device. The method includes: determining a device trustlist, where the device trustlist includes a device identifier of one or more IoT devices; receiving a second broadcast frame from a first IoT device, where the second broadcast frame includes a device identifier of the first IoT device; and determining, based on the second broadcast frame, that the device identifier of the first IoT device matches the device trustlist, and providing network configuration information of a wireless local area network in which the configuration device is located for the first IoT device, where the network configuration information is used by the first IoT device to access the wireless local area network.

According to the implementation of this application, the configuration device assists the IoT device in completing a network configuration information obtaining stage of a network configuration process, and different stages of the network configuration process of the IoT device may be performed with assistance of different devices. Therefore, network configuration processes of different IoT devices may be performed in parallel, thereby improving network configuration efficiency in a batch network configuration scenario.

In addition, a difference from a SoftAP network configuration manner lies in that, in the implementation of this application, the configuration device performs identity authentication on the IoT device to be network-configured based on the device trustlist, thereby reducing user operations.

In some implementations, the second broadcast frame includes an encryption parameter; and the providing network configuration information of a wireless local area network for the first IoT device includes: determining an encryption key based on the encryption parameter in the second broadcast frame; and encrypting the network configuration information based on the encryption key, and sending the encrypted network configuration information to the first IoT device.

A fourth aspect provides a wireless local area network system, where the system includes a mobile device, a configuration device, and at least one IoT device, the at least one IoT device includes a first IoT device, the mobile device is configured to perform steps performed by the mobile device in the method provided in any implementation in the first aspect of this application, the configuration device is configured to perform steps performed by the configuration device in the method provided in any implementation in the first aspect of this application, and the first IoT device is configured to perform steps performed by the first IoT device in the method provided in any implementation in the first aspect of this application. For beneficial effects that can be achieved in the fourth aspect, refer to beneficial effects of any implementation of the first aspect of this application. Details are not described herein again.

According to a fifth aspect, an electronic device is provided, including: a memory, configured to store instructions executed by one or more processors of the electronic device; and a processor, where when the processor executes the instructions in the memory, the electronic device may perform the method provided in any implementation in the second aspect of this application. For beneficial effects that can be achieved in the fifth aspect, refer to beneficial effects of any implementation of the second aspect of this application. Details are not described herein again.

According to a sixth aspect, an electronic device is provided, including: a memory, configured to store instructions executed by one or more processors of the electronic device; and a processor, where when the processor executes the instructions in the memory, the electronic device may perform the method provided in any implementation in the third aspect of this application. For beneficial effects that can be achieved in the sixth aspect, refer to beneficial effects of any implementation of the third aspect of this application. Details are not described herein again.

A seventh aspect provides a computer-readable storage medium. The computer-readable storage medium stores instructions, and when the instructions are executed on a computer, the computer is enabled to perform the method provided in any implementation of the first aspect, any implementation of the second aspect, or any implementation of the third aspect of this application. For beneficial effects that can be achieved in the seventh aspect, refer to beneficial effects of any implementation in the first aspect of this application, any implementation in the second aspect of this application, or any implementation in the third aspect of this application. Details are not described herein again.

### BRIEF DESCRIPTION OF DRAWINGS

FIG. 1 is diagram of an example structure of a wireless local area network according to an embodiment of this application;
FIG. 2 is a diagram of an operating channel of a wireless local area network according to an embodiment of this application;
FIG. 3 is a diagram of a structure of a management frame according to an embodiment of this application;
FIG. 4(a) and FIG. 4(b) are a diagram of an example structure of a home local area network according to an embodiment of this application;
FIG. 5 is a diagram 1 of an example interface of a device management application according to an embodiment of this application;
FIG. 6 is an example flowchart of a network configuration method according to some embodiments;
FIG. 7 is a diagram 2 of an example interface of a device management application according to an embodiment of this application;
FIG. 8 is a diagram of a batch network configuration process for devices according to some embodiments;
FIG. 9A and FIG. 9B are an example flowchart 1 of a wireless local area network access method according to an embodiment of this application;
FIG. 10 is a diagram 3 of an example interface of a device management application according to an embodiment of this application;
FIG. 11 is a diagram 1 of an operating state of a home device in an AP mode according to an embodiment of this application;
FIG. 12 is a diagram of a structure of a first broadcast frame according to an embodiment of this application;
FIG. 13 is a diagram of a structure of a reply frame for a first broadcast frame according to an embodiment of this application;
FIG. 14 is a diagram of a structure of a second broadcast frame according to an embodiment of this application;
FIG. 15 is a diagram of a structure of a response frame for a second broadcast frame according to an embodiment of this application;
FIG. 16 is a diagram 4 of an example interface of a device management application according to an embodiment of this application;
FIG. 17 is an example flowchart 2 of a wireless local area network access method according to an embodiment of this application;
FIG. 18 is a diagram 2 of an operating state of a home device in an AP mode according to an embodiment of this application;
FIG. 19A is a diagram of a batch network configuration process for devices according to an embodiment of this application;
FIG. 19B is a diagram 5 of an example interface of a device management application according to an embodiment of this application;
FIG. 20 is an example flowchart 3 of a wireless local area network access method according to an embodiment of this application;
FIG. 21 is an example flowchart of sending a second broadcast frame by an IoT device according to an embodiment of this application;
FIG. 22 is an example flowchart of sending network configuration information by a configuration device in a ciphertext manner according to an embodiment of this application;
FIG. 23 is an example flowchart of decrypting network configuration information by an IoT device according to an embodiment of this application;
FIG. 24 is a diagram of an architecture of an electronic device according to an embodiment of this application;
FIG. 25 shows a block diagram of an electronic device according to an implementation of this application; and
FIG. 26 shows a diagram of a structure of a system on chip (System on Chip, SOC) according to an implementation of this application.

### DESCRIPTION OF EMBODIMENTS

This application provides a wireless local area network access method, so that when batch network configuration is performed on internet of things (Internet of Things, IoT) devices, network configuration efficiency can be improved, and user operations can be simplified.

For ease of understanding, some terms in embodiments of this application are first described.
(1) Wireless local area network (wire local area network, WLAN): The wireless local area network ("wireless network" for short) is a network system in which a plurality of computer devices are interconnected by using a wireless communication technology, so that the plurality of computer devices can communicate with each other and implement resource sharing.

The wireless local area network complies with the IEEE 802.11 series protocols defined by the Institute of Electrical and Electronics Engineers (Institute of Electrical and Electronics Engineers, IEEE). Currently, the IEEE 802.11 series protocols include a plurality of versions such as 802.11be, 802.11ax, and 802.11a/b/g/n/ac. In this application, the wireless local area network may be a wireless network based on any protocol version. In some embodiments, the wireless local area network may be a wireless fidelity (Wireless Fidelity, Wi-Fi) network, a cellular network, or the like. In this specification, a device that can access the wireless local area network is referred to as a "wireless device".

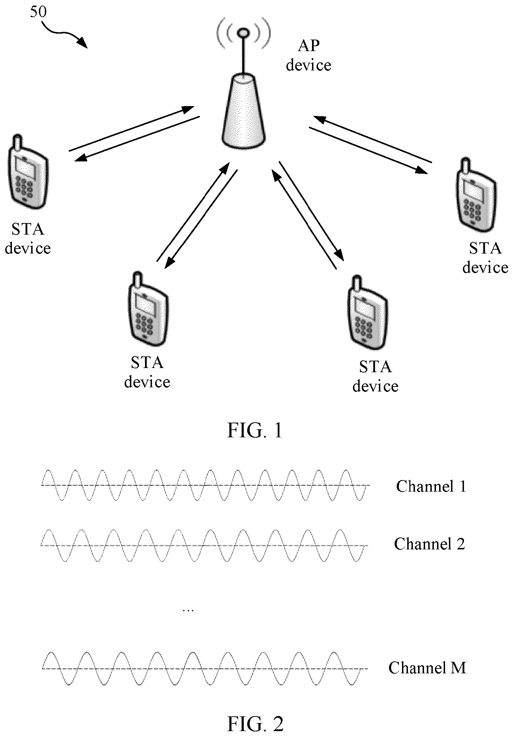

FIG. 1 shows an example structure of a wireless local area network 50. Refer to FIG. 1. The wireless local area network 50 includes a plurality of wireless devices: one access point (Access Point, AP) device and a plurality of station (Station, STA) devices. The AP device is configured to create the wireless local area network 50, and is located at a hub location of the wireless local area network 50, and the STA device is located at an endpoint location of the wireless local area network 50. The STA device establishes a connection (or referred to as an "association (association)") with the AP device to access the wireless local area network 50. After the STA device accesses the wireless local area network 50, different STA devices may exchange data with each other through the AP device, and usually, direct data exchange is not performed between the STA devices.

The wireless local area network 50 may externally declare an identity of the wireless local area network 50 by using a network identifier (Service Set Identifier, SSID). The SSID may be a specific character string including a letter, a digit, and the like, for example, "Connection7890". The AP device may send a broadcast frame carrying the SSID, to declare existence of the wireless local area network 50. After discovering the wireless local area network 50, another device may request to access the wireless local area network 50 from the AP device. In the following, a device that requests to access the wireless local area network 50 is referred to as a "device to be network-configured".

The device to be network-configured may access the wireless local area network 50 by sending network configuration information to the AP device. When the wireless local area network 50 is an encrypted network (for example, a private network in a place like a home or an office), the network configuration information includes a network identifier (Service Set Identifier, SSID) and an access password (Password, PWD) of the wireless local area network 50. When the wireless local area network 50 is a public network (for example, a public network in a place like a shopping mall or a station), the network configuration information may not include a PWD.

(2) AP mode and STA mode: The AP mode and the STA mode are two operating modes of a wireless device. When the wireless device operates in the AP mode, the wireless device may function as an AP device. For example, when the wireless device operates in the AP mode, the wireless device is responsible for sending the broadcast frame carrying the SSID of the wireless local area network, so that the device to be network-configured can discover the wireless local area network 50; and is further responsible for monitoring a connection request of the device to be network-configured, to connect the device to be network-configured to the wireless local area network 50.

When the wireless device operates in the STA mode, the wireless device may perform WLAN scanning (namely, wireless channel scanning) to discover the wireless local area network 50 in an environment, and may further send a connection request to the AP device to access the wireless local area network 50. In addition, it may be understood that the STA device in the wireless local area network 50 also operates in the STA mode.

It should be noted that the wireless device may operate in different modes in different time periods. For example, the wireless device may operate in the AP mode in a time period TA, and operate in the STA mode in a time period TB.

(3) Channel: The channel, also referred to as a channel (Channel), is a data signal transmission channel that uses a radio signal (an electromagnetic wave) as a transmission carrier. The IEEE 802.11 protocol specifies a plurality of operating channels of the wireless local area network 50, where some channels are in a 2.4 GHz frequency band, and some channels are in a 5 GHz frequency band.

For ease of description, as shown in FIG. 2, in this specification, the operating channels of the wireless local area network 50 are denoted as a channel 1, a channel 2, ..., and a channel M, where M is any integer greater than 2 (for example, M=13). At a same moment, all devices in the wireless local area network 50 operate on a same channel, for example, a channel 4, and the channel is configured by the AP device. In addition, the AP device may further periodically update a current operating channel of the wireless local area network 50. For example, the AP device updates the current operating channel to a next adjacent channel at 2:00 a.m. every day.

The STA device in the wireless local area network 50 may temporarily leave the current operating channel. For example, when the STA device needs to discover another wireless local area network 50, the STA device may temporarily leave the current operating channel to perform WLAN scanning (perform alternate listening on the channel 1 to the channel M). The AP may set a maximum time T1 after which the STA device leaves the current operating channel, for example, set T1 to 10s. After the time T1 elapses after the STA device leaves the current operating channel, the AP device disconnects from the STA device.

(4) Management frame: An IEEE 802.11 protocol frame includes three different types of frames: a data frame, a control frame, and a management frame. When the AP device and the STA device are in a connected state, the AP device and the STA device may exchange information by using the data frame and the control frame. When the AP device and the STA device are in a non-connected state, the AP device and the STA device may perform interaction by using the management frame.

The management frame further includes a plurality of different sub-types of management frames, for example, a beacon (beacon) frame, a probe request (Probe Request) frame, a probe request response (Probe Response) frame, an association request (Association Request) frame, and a disassociation (Disassociation) frame. Different sub-types of management frames can be used in different scenarios. For example, the beacon frame can be used to externally declare existence of the wireless local area network 50, and the association request frame can be used to establish an association (or referred to as a "connection") between the AP device and the STA device.

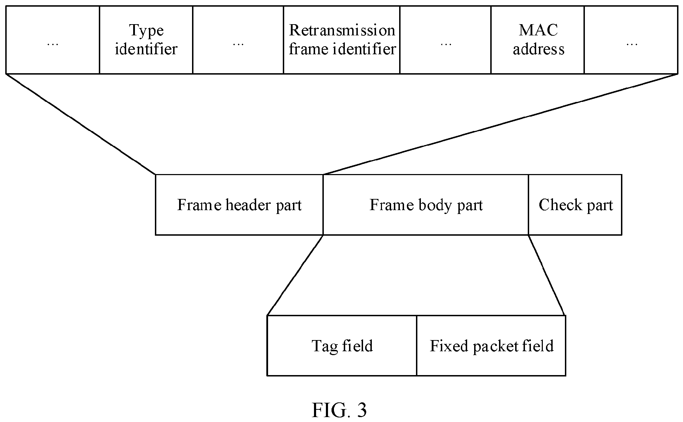

FIG. 3 is a diagram of a structure of a management frame. Refer to FIG. 3. The management frame includes a frame header part, a frame body part, and a check part. The frame header part includes a plurality of control fields of the management frame, for example, a type identifier field (used to identify a sub-type of the management frame), a retransmission frame identifier field, an encrypted frame identifier field, and a MAC address field (used to write a MAC address of a local device).

The frame body part includes a fixed packet field and a user-defined packet field (or referred to as a "tag field"). The fixed packet field is used to write specific information of the management frame, for example, timestamp information and channel information. The tag field is used to write user-defined information.

The check part is used to write check information of the management frame, and is used for error check of the management frame. A check manner may be cyclic redundancy check (Cyclic Redundancy Check, CRC) or the like. This is not limited in this application.

The following describes specific embodiments of this application. In this application, a wireless local area network technology is applied to the internet of things (Internet of Things, IoT). That is, a plurality of IoT devices are interconnected with each other by using the wireless local area network technology, to implement communication and information exchange between the plurality of IoT devices, and implement intelligent control and management on the IoT devices. Specifically, this application provides a method for accessing a wireless local area network by an IoT device, to improve access efficiency in a scenario in which IoT devices perform access in batches.

In this application, the wireless local area network may be used in any scenario, for example, various scenarios such as a home, a factory, a dock, an office building, a mine, a ship, and an aircraft. In addition, the IoT device that accesses the wireless local area network may be any device, for example, an office device (for example, a projector, a printer, or a mouse), a smart home device (for example, a lighting device, a cooking device, or a cleaning device), city public facility (for example, a road surveillance camera or fire extinguishing equipment), a factory pipeline device (for example, various location sensors and drive motors), and a building construction device (for example, a winch or an electric welding machine). This is not limited in this application.

In the following, a home local area network is used as an example of the wireless local area network, and a smart home device is used as an example of the IoT device. However, it may be understood that this application is not limited thereto.

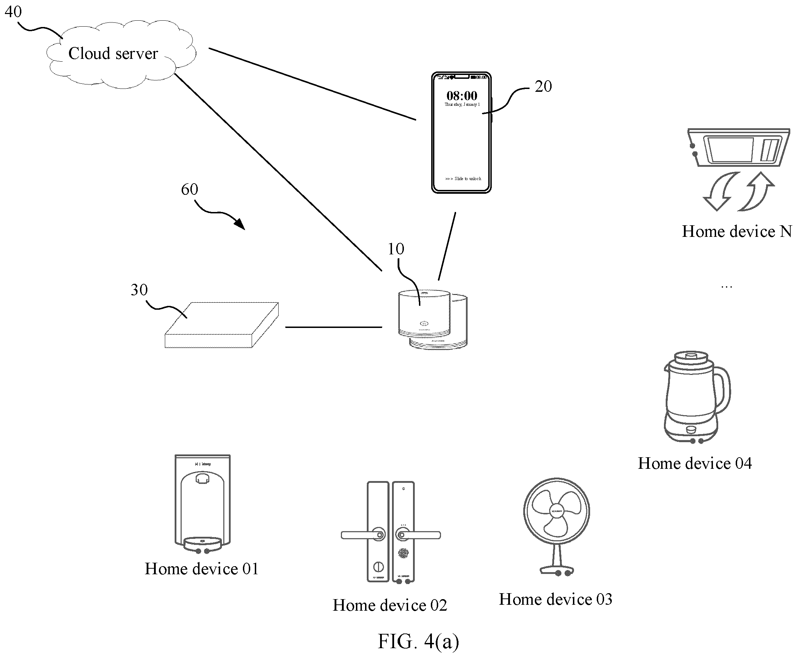

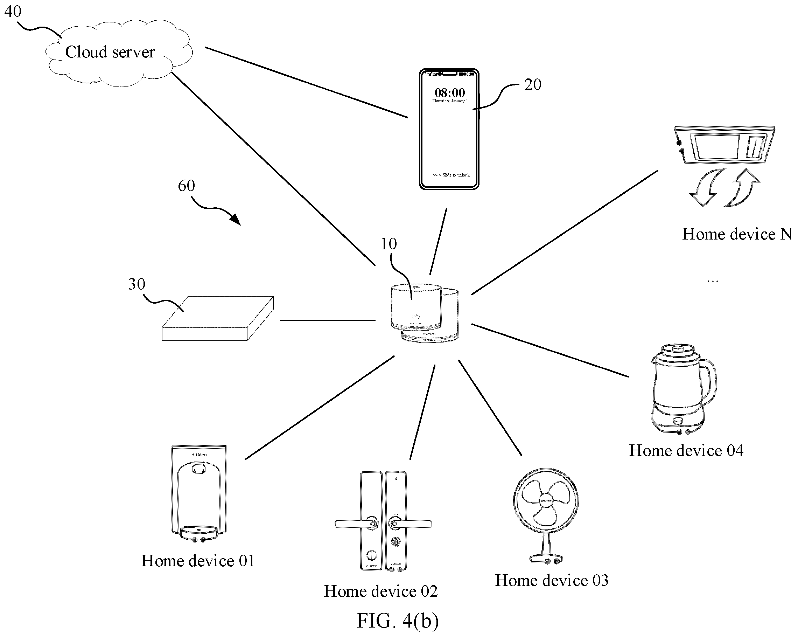

FIG. 4(a) and FIG. 4(b) are a diagram of an example structure of a home local area network 60 according to an implementation of this application. FIG. 4(a) shows a state in which a home device does not access the home local area network 60, and FIG. 4(b) shows a state in which the home device accesses the home local area network 60. FIG. 4(a) and FIG. 4(b) include an AP device 10 (for example, a home gateway), a mobile device 20 (for example, a mobile phone), a configuration device 30 (also referred to as a "main configurator"), and a plurality of smart home devices (a home device 01, a home device 02, ..., and a home device N). A specific category of the home device is not limited in embodiments. For example, the home device may be a water dispenser, a door lock, a fan, a hot water kettle, an air conditioner, or the like shown in FIG. 4(a) and FIG. 4(b), or may be a robotic vacuum cleaner, a microwave oven, a light strip, or the like that is not shown in FIG. 4(a) and FIG. 4(b). In FIG. 4(a), the mobile device 20 and the configuration device 30 are connected to the AP device 10. In FIG. 4(b), in addition to the mobile device 20 and the configuration device 30, the home devices are also connected to the AP device 10. This embodiment provides a wireless local area network access method for the home devices to access the home local area network 60. For example, the home device is changed from a state in FIG. 4(a) in which the home device is not connected to the AP device 10 to a state in FIG. 4(b) in which the home device is connected to the AP device 10.

It may be understood that, in the home local area network 60, the configuration device 30, the mobile device 20, and the home devices each are a STA device. For example, an SSID of the home local area network 60 is "Connection7890", and a PWD is "abc123". In some embodiments, the mobile device 20 and/or the AP device 10 may be connected to the internet, to be able to access a device (for example, a cloud server 40) on the internet. In some other embodiments, the mobile device 20 may not access the home local area network 60.

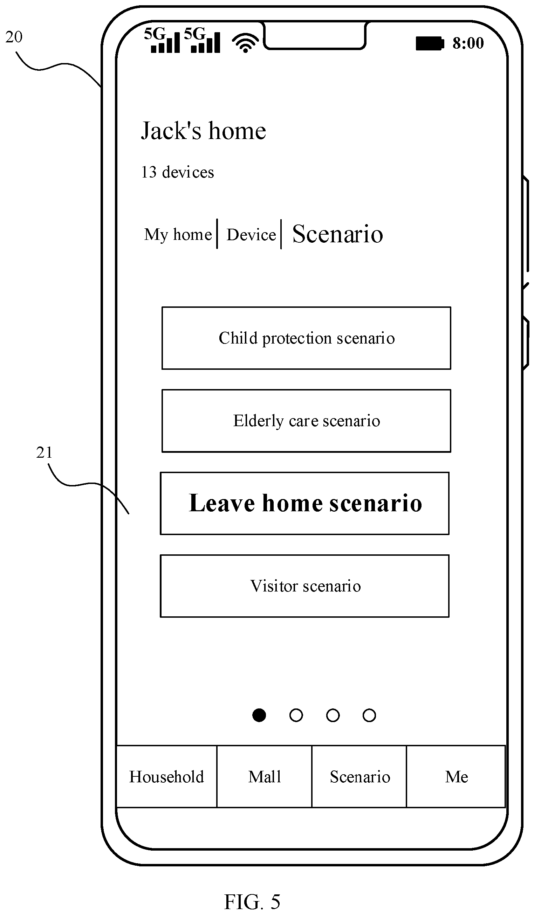

After the home device accesses the home local area network 60, the mobile device 20 may perform unified control on the home devices. FIG. 5 shows an example. Refer to FIG. 5. The mobile device 20 includes a device management application (for example, Smart LifeTM) that manages the home device, and a scenario interface 21 of the device management application includes a plurality of scenario options. After selecting a scenario, a user may control each home device to work in a mode corresponding to the scenario. For example, after selecting a "Leave home" option, the user may control each home device to work in a user-leave-home mode, for example, the door lock is closed, and the air conditioner is turned off.

In some embodiments, the cloud server 40 is used as a background device for controlling the home device. For example, after accessing the home local area network 60, each home device registers with the cloud server 40. When the user controls the home device by using the mobile device 20, the mobile device 20 sends control information of the user to the cloud server 40. After analyzing the control information of the user, the cloud server 40 delivers a specific control instruction to the home device. For example, after the user selects the "Leave home" option, the cloud server 40 delivers a closing instruction to the door lock. However, this application is not limited thereto. For example, in another embodiment, another device (for example, the configuration device 30) may alternatively be used as a background device for controlling the home device.

Specific forms of the AP device 10, the configuration device 30, and the mobile device 20 are not limited in this application. For example, the AP device 10 may be a home gateway, a router, or a computer; the configuration device 30 may be a smart box, a large screen device, or a smart sound box; and the mobile device 20 may be a mobile phone, a tablet, a notebook computer, or a wearable device. In some embodiments, the mobile device 20 may have a good user interaction interface, for example, a touchscreen or a camera.

In order to perform unified control on the home devices, the home devices need to access the home local area network 60. A process in which the home device accesses the home local area network 60 may also be referred to as a process of performing network configuration on the home device. In some scenarios (for example, a new decoration scenario, and a scenario in which devices in an entire house are intelligently upgraded), network configuration needs to be performed on home devices in batches. For example, network configuration needs to be performed on a home device 1 to a home device N in batches.

In some embodiments, a method for network configuration on a home device is as follows: The AP device 10 or the mobile device 20 broadcasts or multicasts an IEEE 802.11 packet carrying network configuration information M of the home local area network 60 (usually including the SSID and the PWD of the home local area network 60), and the home device listens to a packet in an environment in a promiscuous mode. The promiscuous mode is a data receiving mode of a network device (which may be the wireless device described in this specification, or may be another network device, for example, a device in a wired network). When the network device is in the promiscuous mode, the network device can receive all packets that pass through the network device, regardless of whether destination addresses of the packets are the network device. After capturing a data packet that meets a network configuration rule, the home device locks a current channel, and attempts to receive all packets on the current channel to obtain the network configuration information M through parsing. Then, the home device initiates a connection request to the AP device 10 based on the received network configuration information M, to establish a connection to the AP device 10. The network configuration manner provided in the implementation is referred to as a "one-click network configuration manner".

In the one-click network configuration manner, a strict compatibility requirement is posed on the AP device 10 and the mobile device 20. For example, when the AP device 10 disables a broadcast or multicast function, or the mobile device 20 is connected to another wireless hotspot (for example, a 5G hotspot), the home device cannot receive the network configuration information M, and therefore cannot be connected to the home local area network 60. Therefore, in the one-click network configuration manner, overall compatibility is poor, and a network configuration success rate is low.

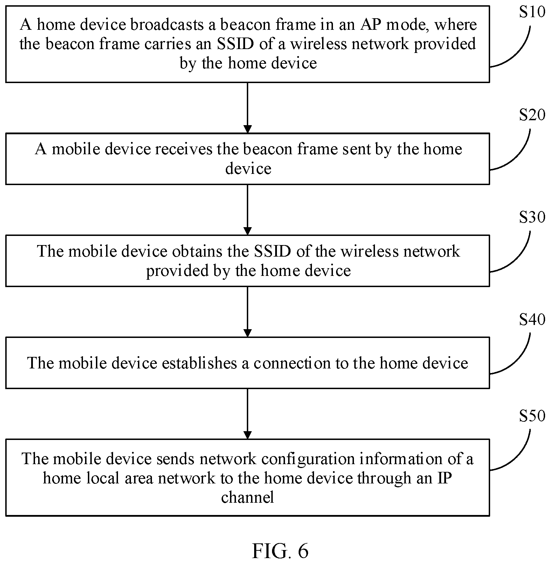

In some other implementations, network configuration is performed on the home device in a soft access point (SoftAP) manner. A main difference between the SoftAP manner and the one-click network configuration manner lies in that, in the one-click network configuration manner, the mobile device 20 sends the network configuration information M in the multicast or broadcast manner, and in the SoftAP manner, the mobile device 20 sends the network configuration information M to the home device through a point-to-point IP channel. Descriptions are provided below with reference to FIG. 6.

FIG. 6 shows, by using a home device 10 as an example, an example process in which the mobile device 20 sends the network configuration information M of the home local area network 60 to the home device in the SoftAP network configuration manner. The process specifically includes the following steps.

S10: The home device 10 broadcasts a beacon frame in an AP mode.

When the home device 10 is in a to-be-network-configured state, the home device 10 first operates in the AP mode, and sends the beacon frame in the AP mode. The beacon frame carries an SSID of a wireless network (denoted as a "wireless network E") provided by the home device 10, for example, "heater".

S20: The mobile device 20 receives the beacon frame sent by the home device 10.

The mobile device 20 performs WLAN scanning (or referred to as "wireless channel scanning", which is specifically alternately listening to a radio frame in an environment on a channel 1 to a channel M). When the mobile device 20 scans an operating channel (for example, a channel 3) on which the home device 10 operates, if the home device 10 sends a complete beacon frame, the mobile device 20 may receive the beacon frame.

S30: The mobile device 20 obtains the SSID of the wireless network provided by the home device 10. The mobile device 20 may obtain the SSID of the wireless network E (the SSID may be understood as network configuration information of the wireless network E) by parsing the beacon frame.

S40: The mobile device 20 establishes a connection to the home device 10.

The mobile device 20 initiates a connection request to the home device 40 based on the obtained SSID. After receiving the connection request, the home device 10 establishes the connection to the mobile device 20. After the mobile device 20 is successfully connected to the home device 10, a point-to-point IP channel may be established between the mobile device 20 and the home device 10. For example, in a process of establishing the connection to the mobile device 20, the home device 10 allocates an IP address (for example, 192.168.1.10) to the mobile device 20 according to a dynamic host configuration protocol (Dynamic Host Configuration Protocol, DHCP), to establish the point-to-point IP channel with the mobile device 20.

S50: The mobile device 20 sends the network configuration information M to the home device 10 through the IP channel.

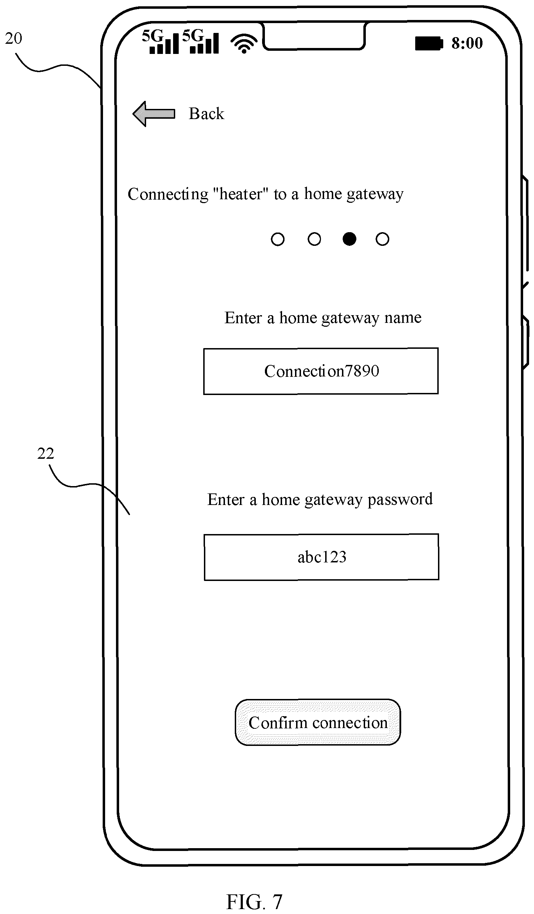

Specifically, the mobile device 20 first requests the user to enter the network configuration information M, and then sends the network configuration information M entered by the user to the home device 10. For example, after establishing the connection to the home device 10, the mobile device 20 displays a network configuration information entering interface 22 shown in FIG. 7. After confirming that a device to be network-configured is correct (for example, confirming the device to be network-configured by using a device identifier "heater"), the user enters the SSID and the PWD of the home local area network 60 (that is, the network configuration information M of the home local area network 60) in an input box in the interface 22. After receiving a user input, the mobile device 20 sends the network configuration information M of the home local area network 60 to the home device 10 through the IP channel established with the home device 10.

After receiving the network configuration information M, the home device 10 switches an operating mode of the home device 10 from the AP mode to a STA mode. Then, the home device 10 initiates the connection request to the AP device 10 in the home local area network 60 based on the received network configuration information M, to access the home local area network 60.

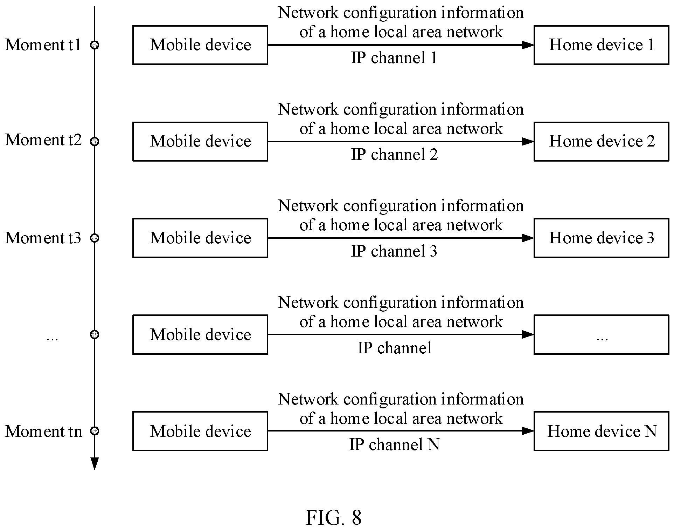

In the SoftAP network configuration manner, the mobile device 20 sends the network configuration information M to the home device through the point-to-point IP channel. According to the IEEE 802.11 protocol, a STA device (for example, the mobile device 20) can establish a connection to only one AP device 10 (for example, the home device) at a same moment. Therefore, the mobile device 20 can assist only one home device in network configuration at a same moment. Refer to FIG. 8. When there are a plurality of home devices to be network-configured (a home device 1, a home device 2, ..., and a home device N), the mobile device 20 needs to establish a connection to each home device one by one. As a result, a network configuration process is slow, and operations are cumbersome.

In addition, to establish a connection to a home device to be network-configured, the mobile device 20 needs to disconnect from the AP device 10 in the home local area network 60. Therefore, normal communication of the mobile device 20 is affected.

In addition, to receive the beacon frame sent by the home device, the mobile device 20 needs to perform WLAN scanning on each channel. A time for which the mobile device 20 listens to an operating channel of the home device needs to overlap a time for which the home device sends the beacon frame, and therefore the mobile device 20 can receive the beacon frame. The mobile device 20 usually needs to perform a plurality of rounds of WLAN scanning to receive the beacon frame. As a result, a WLAN scanning step (for example, step S20) takes a long time. When network configuration needs to be performed on the plurality of home devices, the WLAN scanning step may become an efficiency bottleneck of the SoftAP network configuration manner.

In view of this, implementations of this application provide a wireless local area network access method (or referred to as a "network configuration method"), to resolve the foregoing technical problems. In embodiments of this application, two devices (namely, the mobile device 20 and the configuration device 30) assist a home device (as an example of an IoT device) in completing a network configuration process. The mobile device 20 is configured to trigger the home device to switch from the AP device 10 to the STA mode (the stage is referred to as a mode switching stage of the network configuration process), and the configuration device 30 is configured to provide the network configuration information M of the home local area network 60 (as an example of a wireless local area network) for the home device that switches to the STA mode (the stage is referred to as a network configuration information obtaining stage of the network configuration process). In this way, network configuration processes of different home devices may be performed in parallel. For example, when a home device 01 is in the network configuration information obtaining stage of the network configuration process, the home device 02 may be in the mode switching stage of the network configuration process. In this way, network configuration efficiency of the home devices is improved.

In addition, in the network configuration method provided in implementations of this application, the mobile device 20 does not need to establish a connection to the home device. Therefore, in the network configuration process, the mobile device 20 does not need to disconnect from the AP device 10 in the home local area network 60, thereby reducing impact on normal communication of the mobile device 20.

In addition, after the home device switches from the AP mode to the STA mode, the home device may be used as a trigger device to trigger another home device that is still in the AP mode to switch from the AP mode to the STA mode. In this way, a plurality of links for completing mode switching of the home device may be formed, to accelerate a batch network configuration process.

The following describes specific steps of the wireless local area network access method provided in embodiments of this application. In this embodiment, the home local area network 60 is used as an example of a wireless local area network. However, it may be understood that this application is not limited thereto. In another embodiment, the wireless local area network may be used in a plurality of scenarios such as a factory, a dock, a mine, and a ship.

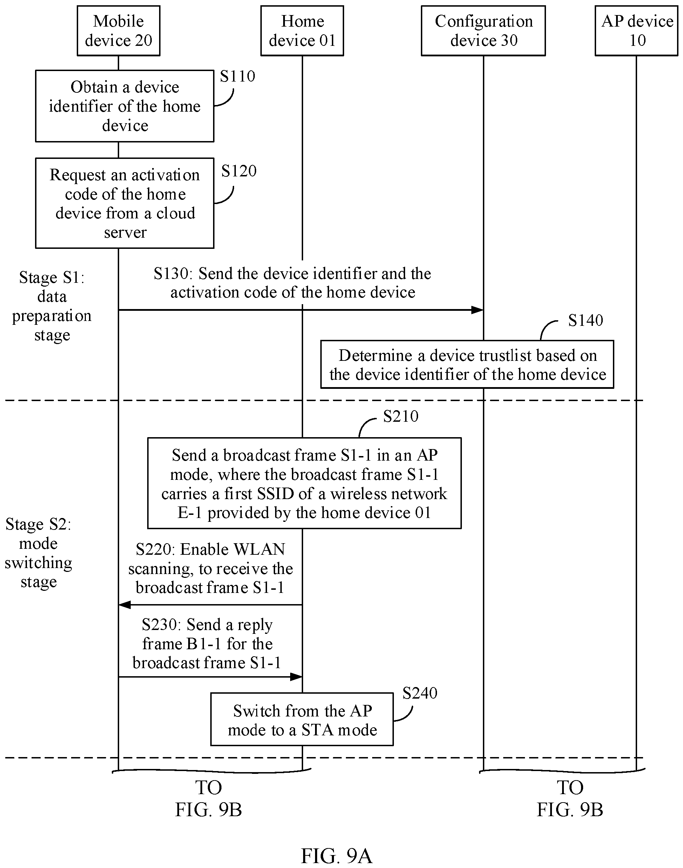

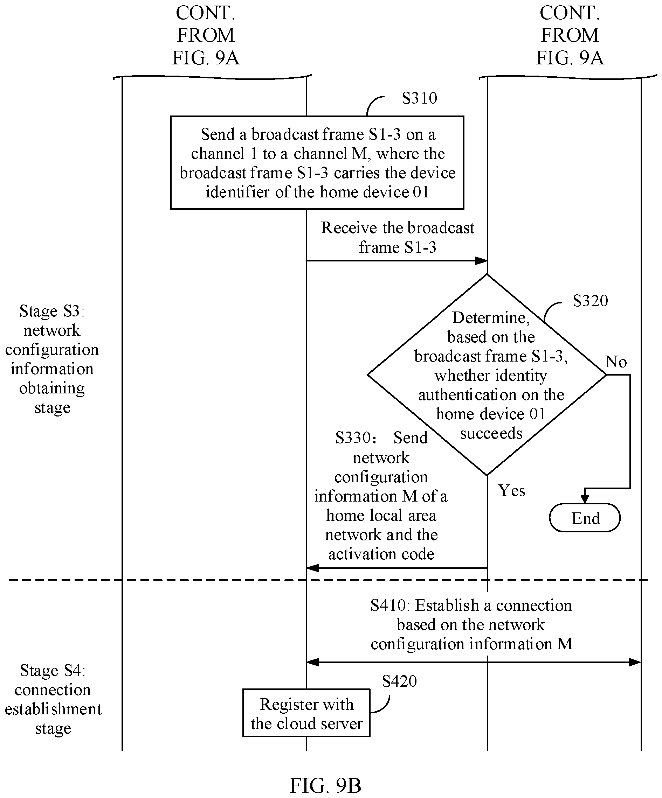

Refer to FIG. 9A and FIG. 9B. The wireless local area network access method provided in this embodiment includes the following steps.

S110: The mobile device 20 obtains a device identifier of a home device to be network-configured.

The device identifier of the home device uniquely identifies an identity of the home device, for example, a media access control (Media Access Control, MAC) address, a product serial number (Serial Number, SN), a personal identification number (Personal identification number, PIN), or a device name of the home device. This is not limited in this application. In this embodiment, the mobile device 20 may obtain one or more types of device identifiers of the home device.

The device identifier of the home device may be located on a body, a package, or an accessory (for example, a specification) of the home device. For example, the device identifier may be printed on a nameplate or a warranty card of the home device, or stored in an embedded chip of the home device, or written in an electronic tag (for example, an NFC chip) of the home device. The device identifier may be presented in various forms such as a bar code, a two-dimensional code, and a character string.

In this embodiment, the mobile device 20 obtains device identifiers of a plurality of home devices (home devices 1 to N) one by one. A manner of obtaining the device identifier by the mobile device 20 is not limited in this embodiment. For example, when the device identifier is a two-dimensional code, the mobile device 20 may obtain the device identifier of the home device by scanning the two-dimensional code; when the device identifier is a character string printed on a nameplate, the mobile device 20 may obtain the device identifier of the home device by receiving a user input; or when the device identifier is NFC tag data, the mobile device 20 may obtain the device identifier of the home device by reading an NFC tag. These are not described one by one.

S120: The mobile device 20 requests an activation code of the home device from a cloud server 40.

To facilitate subsequent registration of the home device with the cloud server 40 (for example, a Huawei home cloud), when the home device is ready to access the home local area network 60, the mobile device 20 requests the activation code of the home device from the cloud server 40 in advance. After accessing the home local area network 60, the home device may initiate a registration request to the cloud server 40 based on the activation code.

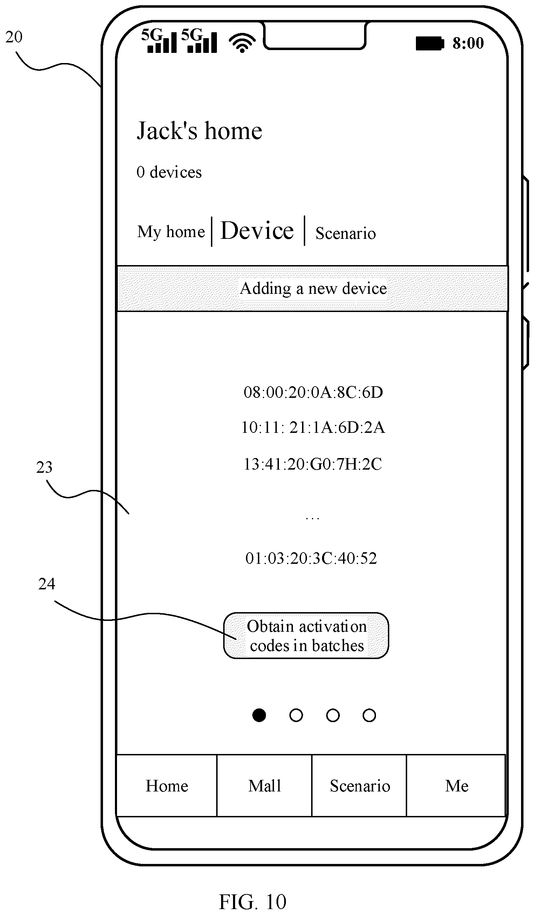

For example, as shown in FIG. 10, after the mobile device 20 obtains device identifiers of N home devices, the obtained device identifiers (MAC addresses of the N home devices are shown in FIG. 10) may be displayed in an interface 23 of a device management application of the mobile device 20. After the user taps an "Obtain activation codes in batches" button 24, the mobile device 20 sends an activation code obtaining request to the cloud server 40, to obtain N activation codes from the cloud server 40. Each activation code may be a random character string, for example, "d2f7".

S130: The mobile device 20 sends the device identifiers and the activation codes of the home devices to the configuration device 30.

For example, the mobile device 20 sends the device identifiers and the N activation codes of the N home devices to the configuration device 30 through the AP device 10 in the home local area network 60.

S140: The configuration device 30 determines a device trustlist based on the device identifiers of the home devices.

After receiving the device identifiers of the home devices, the configuration device 30 determines the device trustlist based on the received device identifiers. The device trustlist is used for subsequent identity authentication on the home device to be network-configured (where an authentication process is specifically described in step S320 below). Table 1 shows an example of the device trustlist. When the device identifiers received by the configuration device 30 include MAC addresses, the MAC addresses are added to a "MAC" column of the device trustlist. When the device identifiers received by the configuration device 30 include SNs, the SNs are added to an "SN" column. In addition, the configuration device 30 further adds the received activation code to an "activation code" column, and allocates the received N activation codes to the N home devices one by one.

**Table 1 Device trustlist**

| Device serial number | MAC | SN | Activation code |
|---|---|---|---|
| 1 | 08:00:20:0A:8C:6D | 002684 | d2f7 |
| 2 | 10:11:21:1A:6D:2A | 000227 | 1258 |
| 3 | 13:41:20:G0:7H:2C | 005849 | 11a4 |
| ... | ... | ... | ... |
| N | 01:03:20:3C:40:52 | 000147 | 2658 |

It should be noted that Table 1 is an example of the device trustlist for description. In another embodiment, the device trustlist may have different forms. For example, the device identifier of the home device may include only one type of device identifier (for example, the MAC address) of the home device. For another example, the device trustlist may not include the activation code of the home device. In addition, a quantity N of the home devices may be any value, for example, 2, 5, or 16.

Steps S110 to S140 are a data preparation stage S1 of the network configuration method provided in this embodiment. In the data preparation stage S1, the configuration device 30 obtains the device trustlist for subsequent identity authentication on the home device. After the data preparation stage S1, a mode switching stage S2 (including step S210 to step S240) of the home device is entered. Steps in the mode switching stage S2 may be used for any home device to be network-configured. The following uses the home device 01 (which is specifically a water dispenser) as an example for description.

S210: The home device 01 (used as a first IoT device) sends a broadcast frame S1-1 (used as a first broadcast frame) in the AP mode, where the broadcast frame S1-1 carries a first network identifier (denoted as a "first SSID") of a wireless network E-1 provided by the home device 01.

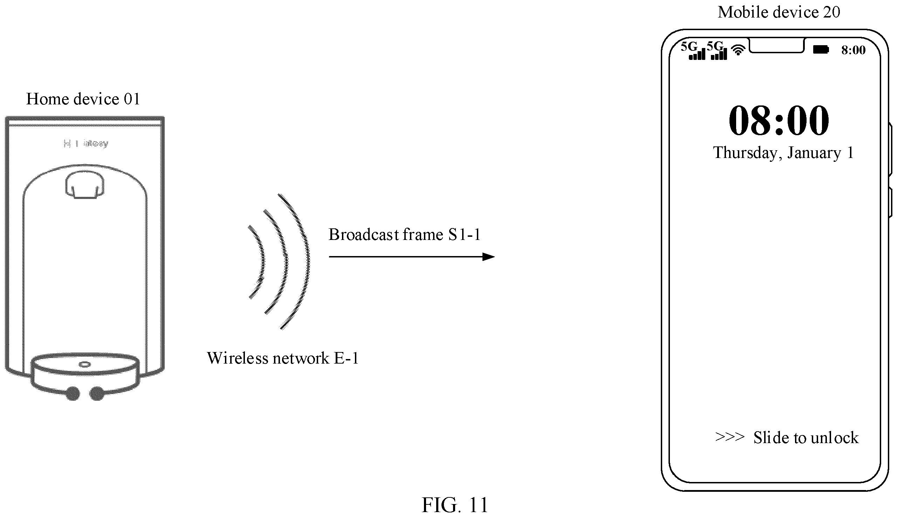

When the home device 01 is in a to-be-network-configured state, the home device 01 first operates in the AP mode. Refer to FIG. 11. The home device 01 may send the broadcast frame S1-1 in the AP mode, to externally provide the wireless network E-1. The broadcast frame S1-1 includes the first SSID of the wireless network E-1. The following describes the first SSID.

The first SSID is a character string named according to a first rule. According to the first rule, the first SSID is a character string of a specified length (for example, 32 bits), and includes a fixed part and a random part. The fixed part is a predetermined fixed character (for example, pw), and the random part is a character string randomly generated by the home device 01 in the network configuration process, for example, "2aacc45...d2356". Each time network configuration is performed on the home device, a value of the random part is updated. That is, each time network configuration is performed on the home device 01, a value of the first SSID varies. This is because if the value of the first SSID is the same each time network configuration is performed, after the broadcast frame S1-1 is illegally captured, another device may use the broadcast frame S1-1 to perform a malicious attack on the home device 01, for example, force the home device 01 to switch from the AP mode to the STA mode. As a result, the home device 01 fails to be network configured. In this embodiment, the home device 01 updates the first SSID each time network configuration is performed, so that a malicious attack from another device can be mitigated.

An order of the fixed part and the random part is not limited in this embodiment. The fixed part may be located before the random part, or may be located after the random part. A length of the fixed part and a length of the random part are not limited in this embodiment. For example, the length of the fixed part and the length of the random part each are 10 bits. In some embodiments, to increase a randomness degree of the first SSID, the length of the random part may be greater than the length of the fixed part. For example, when a total length of the first SSID is 32 bits, the length of the fixed part is 2 bits, and the length of the random part is 30 bits.

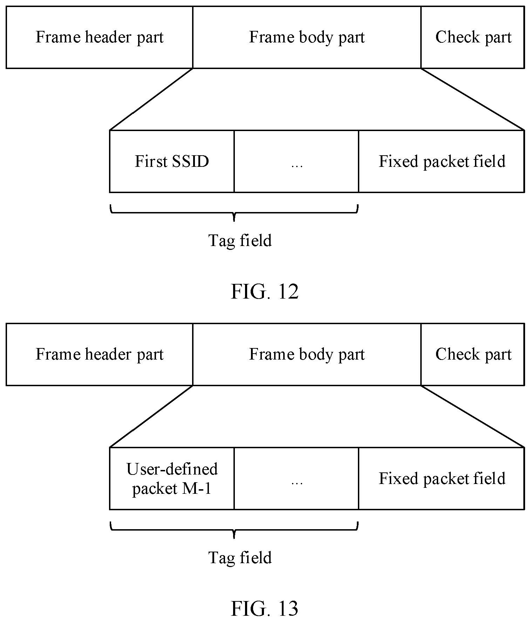

For example, the broadcast frame S1-1 is a management frame. Refer to FIG. 12. The first SSID may be located in a tag field of the broadcast frame S1-1. In some embodiments, in consideration of a case in which a beacon frame is a management frame without a feedback (acknowledge) mechanism, the broadcast frame S1-1 is specifically implemented as the beacon frame. However, this application is not limited thereto. In another embodiment, the broadcast frame S1-1 may alternatively be a management frame of another sub-type, for example, a probe request frame or a probe response frame.

In addition, when the home device 01 is in the AP mode, the broadcast frame S1-1 may be periodically sent at a set time interval ΔT1. A specific value of the time interval ΔT1 is not limited in this application. For example, the time interval ΔT1 may be 50 ms, 100 ms, or 200 ms.

S220: The mobile device 20 enables WLAN scanning, to receive the broadcast frame S1-1 sent by the home device 01.

For example, after sending a device identifier of the home device to the configuration device 30 (for example, after step S130), the mobile device 20 may enable WLAN scanning (or referred to as "wireless channel scanning", which is specifically performing alternate listening on the channel 1 to the channel M), to listen to an IEEE802.11 protocol frame in the environment. When the mobile device 20 listens to an operating channel (for example, a channel 2) of the home device 01, if the home device 01 sends the complete broadcast frame S1-1, the mobile device 20 may receive the broadcast frame S1-1.

S230: The mobile device 20 sends a reply frame B1-1 (used as a first reply frame) for the broadcast frame S1-1 to the home device 01.

After receiving the broadcast frame S1-1, the mobile device 20 may obtain the first SSID of the home device 01 by parsing the broadcast frame S1-1, and send the reply frame B1-1 for the broadcast frame S1-1 to the home device 01. It may be understood that the mobile device 20 sends the reply frame B1-1 on the operating channel (for example, the channel 2) of the home device 01, so that the home device 01 can receive the reply frame B1-1. After sending the reply frame B1-1, the mobile device 20 may continue to perform channel scanning, to listen to a broadcast frame sent by another home device.

The reply frame B1-1 may include a user-defined packet M-1 (used as a first packet). In some embodiments, the user-defined packet M-1 is a packet determined based on the first SSID of the home device 01. For example, the user-defined packet M-1 is the same as the first SSID of the home device 01; or the user-defined packet M-1 is of a reverse order of the first SSID of the home device 01; or the user-defined packet M-1 is a hash value obtained by performing a hash operation on the first SSID of the home device 01. These are not described one by one. In this way, after receiving the reply frame B1-1, the home device 01 may determine that the reply frame B1-1 is a reply to the broadcast frame S1-1.

The reply frame B1-1 may be a management frame. Referring to FIG. 13. The user-defined packet M-1 may be located in a tag field of the reply frame B1-1. A specific type of the reply frame B1-1 is not limited in this embodiment. For example, the reply frame B1-1 may be a beacon frame, a probe request frame, or a probe response frame. In addition, in another embodiment, the reply frame B1-1 may not include the user-defined packet M-1, but includes a packet in a fixed format, for example, includes a packet "0000" in a fixed format.

S240: The home device 01 switches from the AP mode to the STA mode.

The home device 01 switches from the AP mode to the STA mode in response to receiving the reply frame B1-1. That is, the reply frame B1-1 is used to trigger the home device 01 to switch from the AP mode to the STA mode. The mobile device 20 is a trigger device that assists the home device 01 in completing mode switching.

Steps S210 to S240 are the mode switching stage S2 of the network configuration method provided in this embodiment. In the mode switching stage S2, the home device to be network-configured switches from the AP mode to the STA mode. After the mode switching stage S2, a network configuration information obtaining stage S3 (including step S310 to step S330) of the home device is entered. Steps in the network configuration information obtaining stage S3 may be used for any home device that has completed mode switching. The following still uses the home device 01 as an example for description.

S310: The home device 01 sends a broadcast frame S1-3 (used as an example of a second broadcast frame) on the channel 1 to the channel M, where the broadcast frame S1-3 carries the device identifier of the home device 01.

After completing mode switching (that is, after switching from the AP mode to the STA mode), the home device 01 alternately sends broadcast frame S1-3 on the channel 1 to the channel M. The broadcast frame S1-3 carries the device identifier of the home device 01, for example, a MAC address and/or an SN of the home device 01. For other details of the device identifier of the home device 01, refer to the descriptions in step S110. Details are not described again.

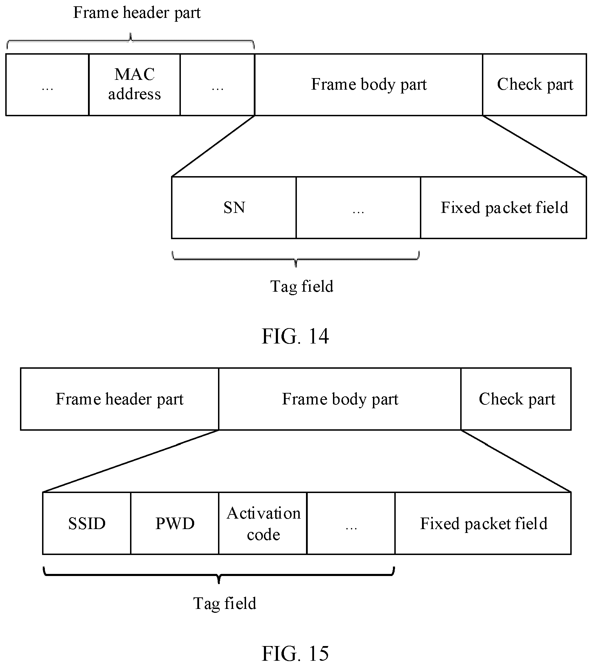

The broadcast frame S1-3 may be a management frame, for example, a beacon frame or a probe request frame. Refer to FIG. 14. When the device identifier of the home device 01 includes the MAC address of the home device, the MAC address of the home device 01 may be located in a frame header part of the broadcast frame S1-3; or when the device identifier of the home device 01 includes another type of identifier (for example, the SN) of the home device 01, the another type of identifier may be located in a tag field of the broadcast frame S1-3.

S320: The configuration device 30 performs identity authentication on the home device 01 based on the broadcast frame S1-3.

The channels (the channel 1 to the channel M) on which the home device 01 sends the broadcast frame S1-3 include a current operating channel of the configuration device 30 (namely, a current operating channel of the home local area network 60, for example, a channel 4). When the home device 01 sends the broadcast frame S1-3 on the channel 4, the configuration device 30 may receive the broadcast frame B1-3.

After receiving the broadcast frame S1-3, the configuration device 30 may obtain the device identifier of the home device 01 by parsing the broadcast frame S1-3. Then, the configuration device 30 matches the device identifier of the home device 01 with the device trustlist. When the device identifier of the home device 01 matches the device trustlist, the home device 01 passes identity authentication performed by the configuration device 30; or when the device identifier of the home device 01 does not match the device trustlist, the home device 01 does not pass the identity authentication performed by the configuration device 30.

When the home device 01 passes the identity authentication performed by the configuration device 30, the configuration device 30 further performs step S330, to send network configuration information M of the home local area network 60 to the home device 01; or when the home device 01 does not pass the identity authentication performed by the configuration device 30, the configuration device 30 may ignore the received broadcast frame S1-3, and does not respond to the broadcast frame S1-3.

Specifically, when the device identifier of the home device 01 is the same as any device identifier in the device trustlist, the configuration device 30 determines that the device identifier of the home device 01 matches the device trustlist; or when the device identifier of the home device 01 is different from any device identifier in the device trustlist, the configuration device 30 determines that the device identifier of the home device 01 does not match the device trustlist.

For example, when the broadcast frame S1-3 includes the MAC address and the SN of the home device 01, the configuration device 30 compares the MAC address with values in the "MAC" column of the device trustlist, and compares the SN with values in the "SN" column of the device trustlist. When the MAC address is the same as one of the MAC values in the device trustlist, and/or the SN is the same as one of the SN values in the device trustlist, the configuration device 30 determines that the device identifier of the home device 01 matches the device trustlist; or when the MAC address is different from one of the MAC values in the device trustlist, and/or the SN is different from one of the SN values in the device trustlist, the configuration device 30 determines that the device identifier of the home device 01 does not match the device trustlist.

S330: The configuration device 30 sends the network configuration information M of the home local area network 60 to the home device 01, where the network configuration information M is used by the home device 01 to access the home local area network 60.

In this embodiment, the network configuration information M of the home local area network 60 includes an SSID (for example, "Connection7890") and a PWD (for example, "abc123") of the home local area network 60. In some other embodiments, when the home local area network 60 is a public network, the network configuration information M of the home local area network 60 may not include the PWD.

The configuration device 30 may send the network configuration information M of the home local area network 60 to the home device 01 by using a response frame B1-3. The response frame B1-3 may be a management frame. Refer to FIG. 15. The network configuration information M of the home local area network 60 may be located in a tag field of the response frame B1-3. In addition, the tag field of the response frame B1-3 may further include an activation code allocated to the home device 01 (for example, an activation code that is in the device trustlist and that is allocated to the home device 01), so that the home device 01 registers with the cloud server 40 based on the activation code (specific details are described in step S420 below).

In addition, in this embodiment, the configuration device 30 sends the network configuration information M of the home local area network 60 in a plaintext manner. In another embodiment, to improve information security, the configuration device 30 may send the network configuration information M of the home local area network 60 in a ciphertext manner. For description continuity, a method for sending the network configuration information M by the configuration device 30 in the ciphertext manner is described below.

Steps S310 to S330 are the network configuration information obtaining stage S3 of the network configuration method provided in this embodiment. In the network configuration information obtaining stage S3, the home device to be network-configured may obtain the network configuration information M of the home local area network 60. After the network configuration information obtaining stage S3, a connection establishment stage S4 (including step S410 and step S420) is entered. Steps in the connection establishment stage S4 may be used for any home device that has obtained the network configuration information M. The following still uses the home device 01 as an example for description.

S410: The home device 01 establishes a connection to the AP device 10 based on the network configuration information M.

After receiving the network configuration information M sent by the configuration device 30, the home device 01 may initiate the connection to the AP device 10 based on the network configuration information M. For example, the home device 01 sends, to the AP device 10, an association request (Association Request) frame that carries the network configuration information M. After receiving the association request frame, the AP device 10 performs authentication on the home device 01 based on the network configuration information M in the association request frame, and establishes the connection to the home device 01 after the authentication succeeds. For other details of establishing the connection between the home device 01 and the AP device 10, refer to descriptions in the conventional technology. Details are not described. After establishing the connection to the AP device 10, the home device 01 may join the home local area network 60, to complete the network configuration process.

S420: The home device 01 registers with the cloud server 40.

After completing network configuration, the home device 01 may send a registration request to the cloud server 40 through the AP device 10, to register with the cloud server 40.

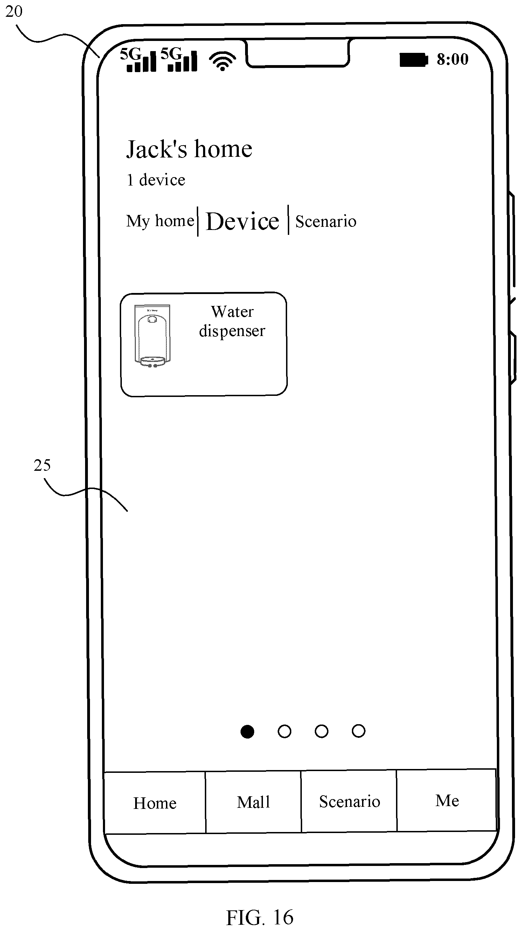

In some embodiments, the registration request sent by the home device 01 may include a device name of the home device 01 and an activation code received by the home device 01 (for example, the activation code sent by the configuration device 30 to the home device 01 in step S330). After performing verification on the activation code of the home device 01, the cloud server 40 may accept the registration request of the home device 01, and add the home device 01 to a device list. Then, the cloud server 40 sends an updated device list to the mobile device 20, so that the user can view, on the mobile device 20, the home device that newly accesses the home local area network 60. For example, as shown in FIG. 16, the user may view the newly added home device 01 (which is specifically the water dispenser) in an interface 25 of the device management application.

In conclusion, this embodiment provides the wireless local area network access method. Two devices (namely, the mobile device 20 and the configuration device 30) assist the home device in completing the network configuration process. The mobile device 20 is configured to trigger the home device to switch from the AP mode to the STA mode, and the configuration device 30 is configured to provide the network configuration information M for the home device. That is, the mobile device 20 assists the home device in completing the mode switching stage S2 of the network configuration process, and the configuration device 30 assists the home device in completing the network configuration information obtaining stage S3 of the network configuration process. Because different stages are performed with assistance of different devices, network configuration processes of different home devices may be performed in parallel. For example, when the home device 01 enters the network configuration information obtaining stage S3 (completed with assistance of the configuration device 30), a home device 03 may concurrently perform the mode switching stage S2 (completed with assistance of the mobile device 20), so that network configuration efficiency in a batch network configuration scenario is improved.

In addition, according to the foregoing descriptions, in the SoftAP network configuration manner, the user performs identity authentication on the home device to be network-configured. After the home device to be network-configured passes the identity authentication performed by the user, the user manually enters the network configuration information M into the mobile device 20. A difference from the SoftAP network configuration manner lies in that, in this embodiment, the configuration device 30 performs, based on the preset device trustlist, identity authentication on the home device to be network-configured, so that user operations can be reduced. For example, the user does not need to manually perform identity authentication on the home device to be network-configured, and does not need to manually enter the network configuration information M to the mobile device 20.

In addition, in this embodiment, in a process of assisting the home device in network configuration, the mobile device 20 does not need to disconnect from the AP device 10, thereby reducing impact on normal communication of the mobile device 20.

It should be noted that this embodiment is an example description of the technical solutions of this application, and a person skilled in the art may make other variations.

For example, in this embodiment, the configuration device 30 obtains the device identifier of the home device through the mobile device 20. When the mobile device 20 is a portable device like a mobile phone, a device identifier of the mobile device 20 may be conveniently obtained in this embodiment. In another embodiment, the configuration device 30 may alternatively directly obtain the device identifier of the home device. For example, when the configuration device 30 is equipped with a camera, the configuration device 30 may obtain the device identifier of the home device by scanning a two-dimensional code. When the configuration device 30 is equipped with a touchscreen, the configuration device 30 may obtain the device identifier of the home device by using a user input.

For another example, in this embodiment, the configuration device 30 and the AP device 10 are implemented as two devices. In this way, the user can implement the network configuration method provided in this embodiment without replacing the existing AP device 10 in a home. In another embodiment, the configuration device 30 and the AP device 10 may be one device.

For another example, in this embodiment, when the home device is ready to access the home local area network 60, the mobile device 20 requests the activation code of the home device from the cloud server 40 in advance (that is, step S120 is performed). In another embodiment, the mobile device 20 may alternatively not request the activation code from the cloud server 40. After network configuration is successfully performed on the home device, the home device requests the activation code from the cloud server 40.

For another example, in this embodiment, the home device sends the first broadcast frame in the AP mode. In another embodiment, in addition to sending the first broadcast frame in the AP mode, the home device may further send a fourth broadcast frame, where the fourth broadcast frame includes a second SSID of the wireless network provided by the home device, and the second SSID is used for the home device in network configuration in the SoftAP manner. The method provided in this embodiment may be applied to any home device. The following still uses the home device 01 as an example for specific description.

For example, in step S210, in addition to sending the broadcast frame S1-1 in the AP mode, the home device 01 may further send a broadcast frame S1-2 (used as the fourth broadcast frame), where the broadcast frame S1-2 carries a second network identifier (denoted as a "second SSID") of the wireless network E-1 provided by the home device 01. The following describes the second SSID.

The second SSID is a character string named according to a second rule. According to the second rule, the second SSID includes several fixed fields. For example, the second SSID sequentially includes a manufacturer field, a device category field, a device model field, a production batch field, and the like of the home device 01.

It may be understood that second SSIDs of different home devices may be of different content. For example, a second SSID of the home device 01 (specifically, the water dispenser) is "fac001heater...03", and a second SSID of the home device 02 (specifically, a door lock) is "fac006locker...11".

In addition, a type of the broadcast frame S1-2 may be the same as a type of the broadcast frame S1-1, for example, each are a beacon frame. The second SSID may be located in a tag field of the broadcast frame S1-2.

Further, when the home device 01 is in the AP mode, the home device 01 may periodically send the broadcast frame S1-1 at the time interval ΔT1, and periodically send the broadcast frame S1-2 at a time interval ΔT2. When the mobile device 20 receives the broadcast frame S1-1 within a set WLAN scanning periodicity (for example, 30s), the mobile device 20 assists the home device in network configuration in the method provided in this embodiment (for example, the method described in steps S210 to S330). When the mobile device 20 does not receive the broadcast frame S1-1 within the set WLAN scanning periodicity, but receives only the broadcast frame S1-2, the mobile device 20 assists the home device in network configuration in the SoftAP manner (for example, performing network configuration according to the method described in steps S10 to S50). Through the setting, when network configuration cannot be performed on the home device in the method provided in this embodiment (for example, when there is no configuration device 30 that supports the method provided in this embodiment in the home local area network 60), or when network configuration in the method provided in this embodiment times out, network configuration can be performed on the home device through the SoftAP, to ensure successful network configuration.

In some embodiments, to make network configuration in the method provided in this embodiment preferentially performed on the home device, the time interval ΔT1 may be less than the time interval ΔT2. For example, the time interval ΔT1 is 50 ms, and the time interval ΔT2 is 200 ms.

In some other embodiments of this application, after the home device completes switching from the AP device 10 to the STA device, the home device may be used as a trigger device to assist another home device that does not complete mode switching in completing mode switching, to further accelerate a batch network configuration process for the home devices. The following provides specific descriptions.

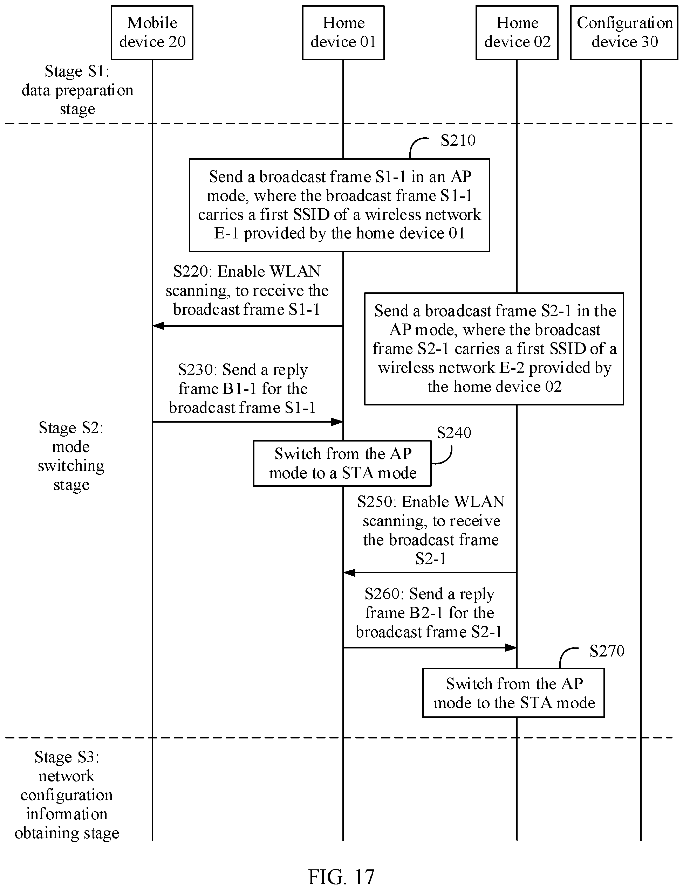

Specifically, as shown in FIG. 17, according to some embodiments of this application, in the mode switching stage S2, after the home device 01 switches from the AP mode to the STA mode (that is, after step S240), the wireless local area network access method may further include the following steps.

S250: The home device 01 performs WLAN scanning, to receive a broadcast frame S2-1 (used as a third broadcast frame) sent by the home device 02, where the broadcast frame S2-1 carries a first SSID of the home device 02.

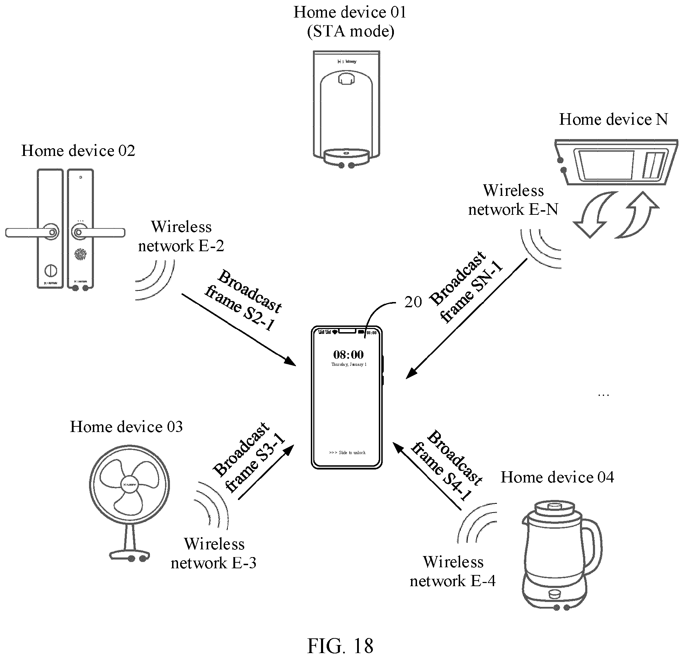

Refer to FIG. 18. After the home device 01 switches to the STA mode, other home devices (the home device 2, a home device 3, ..., and the home device N) are still in the AP mode, and the other home devices may separately send the broadcast frame S2-1, a broadcast frame S3-1, ..., and a broadcast frame SN-1, to externally provide a wireless network E-2, a wireless network E-3, ..., and a wireless network E-N. The broadcast frame sent by each home device carries a first SSID of the wireless network provided by the home device. For example, the broadcast frame S2-1 sent by the home device 02 carries the first SSID of the wireless network E-2.

A method for generating the first SSID by each home device is substantially the same as the method for generating the first SSID by the home device 01 in step S210. Therefore, reference may be made to the descriptions in step S210, and details are not described again. In addition, a method for forming the broadcast frame by each home device is substantially the same as the method for forming the broadcast frame S1-1 by the home device 01 in step S210. Therefore, reference may also be made to the descriptions in step S210, and details are not described again.

After switching to the STA mode, the home device 01 performs WLAN scanning. Through WLAN scanning, the home device 01 may receive a broadcast frame of at least one another home device. For example, the home device 01 receives the broadcast frame S2-1 of the home device 02. The broadcast frame S2-1 carries the first SSID (for example, pw345cc45...f1180) of the wireless network E-2 provided by the home device 02.

S260: The home device 01 sends a reply frame B2-1 for the broadcast frame S2-1 to the home device 02.

After receiving the broadcast frame S2-1, the home device 01 may obtain the first SSID of the wireless network E-2 by parsing the broadcast frame S2-1, and send the reply frame B2-1 for the broadcast frame S2-1. The reply frame B2-1 is used to trigger the home device 02 to switch from the AP mode to the STA mode.

The reply frame B2-1 may include a user-defined packet M-2, and the user-defined packet M-2 may be determined based on the first SSID of the wireless network E-2. A manner of determining the user-defined packet M-2 is substantially the same as a manner of determining the user-defined packet M-1 in step S230. Therefore, reference may be made to the description in step S230, and details are not described again. In addition, a method for forming the reply frame B2-1 is substantially the same as a method for forming the reply frame B1-1 in step S230. Therefore, reference may be made to the description in step S230, and details are not described again.

S270: The home device 02 switches from the AP mode to the STA mode.

The home device 02 switches from the AP mode to the STA stage after receiving the reply frame B2-1. That is, in this embodiment, the home device 01 is a trigger device that triggers the home device 02 to complete mode switching. Similarly, after completing mode switching, the home device 02 may assist another home device that does not complete mode switching in completing a mode switching process.

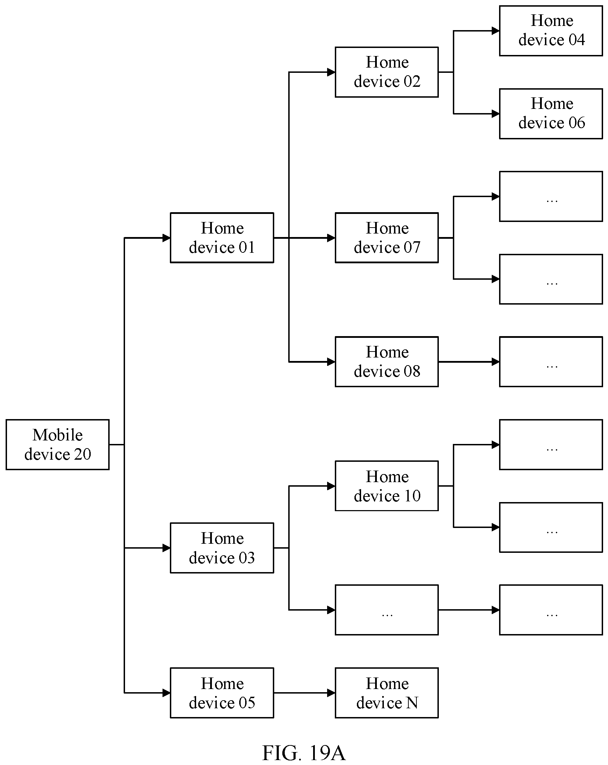

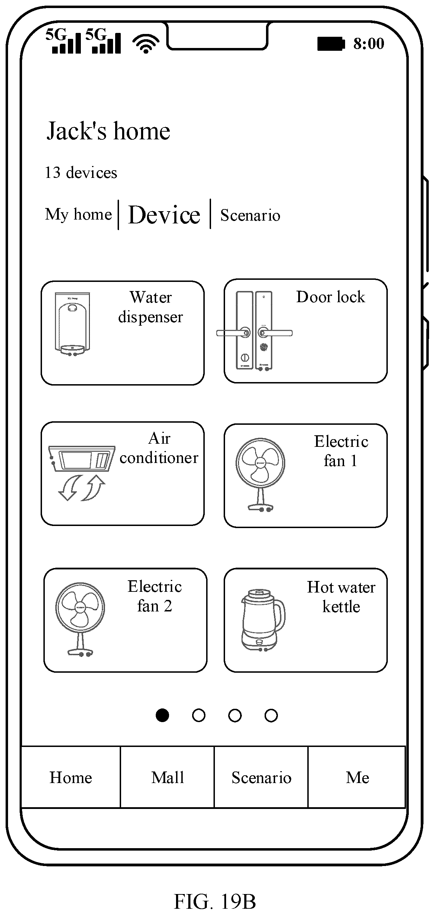

In other words, according to the method provided in this embodiment of this application, a home device that has completed mode switching may assist another home device that has not completed mode switching in completing mode switching, to form a plurality of links for completing mode switching, thereby accelerating a batch network configuration process of the home devices. Descriptions are provided with reference to FIG. 19.

FIG. 19A shows an example process in which a plurality of home devices complete mode switching. In FIG. 19A, the plurality of home devices are connected by using unidirectional arrows, a trigger device is in front of the arrow, and a triggered device is behind the arrow. Refer to FIG. 19A. After the mobile device 20 triggers the home device 01 to complete mode switching, the home device 01 may trigger the home device 02, a home device 07, and a home device 08 to complete mode switching. After the home device 02 completes mode switching, the home device 02 may trigger a home device 04 and a home device 06 to complete mode switching, and the like. That is, according to the method provided in this embodiment, in the batch network configuration process of the home devices, a plurality of links for mode switching are formed in a manner of mutual assistance between the home devices. Compared with a manner in which the home devices complete network configuration in sequence in the SoftAP manner, in the method, network configuration efficiency can be significantly improved.

In addition, as described above, the WLAN scanning stage is a time-consuming stage in the network configuration process. In this embodiment of this application, a WLAN scanning process is completed in a manner of mutual assistance between the home devices, so that an efficiency bottleneck in the network configuration process can be overcome, and network configuration efficiency can be improved. In some embodiments, an example in which a quantity of home devices to be network-configured is 30 is used. Compared with the SoftAP network configuration method, the method provided in this embodiment can improve efficiency by more than five times.

After all of the home devices to be network-configured complete network configuration and register with the cloud server 40, the cloud server 40 returns a latest device list to the mobile device 20, so that the user can view, on the mobile device 20, home devices on which network configuration is successfully performed. For example, as shown in FIG. 19B, the user may view, in the interface 25 of the device management application, the home devices on which network configuration is successfully performed. After network configuration is successfully performed on all of the home devices to be network-configured, the mobile device 20 may send, to the configuration device 30, signaling indicating that network configuration is completed, to notify the configuration device 30 to stop adding a new device.

As described above, in some embodiments, in the network configuration information obtaining stage S3, the configuration device 30 may send the network configuration information M of the home local area network 60 in a ciphertext form, to improve information security.

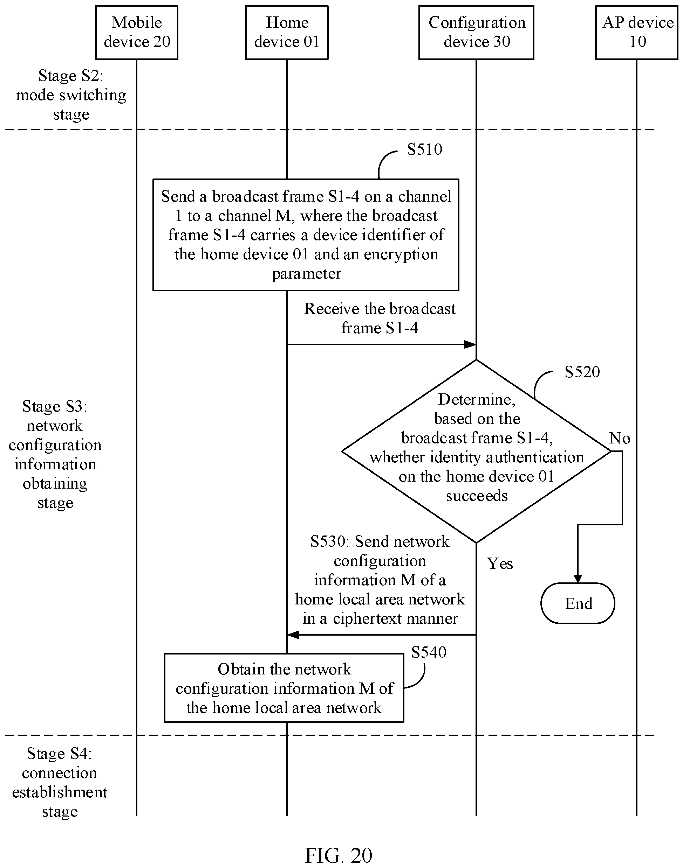

For example, as shown in FIG. 20, in some embodiments, the network configuration information obtaining stage S3 may include the following steps (in the following, the home device 01 is used as an example of a home device for description, but it may be understood that the method provided in this embodiment may be applied to any home device).

S510: The home device 01 sends a broadcast frame S1-4 (used as an example of a second broadcast frame) on the channel 1 to the channel M, where the broadcast frame S1-4 carries the device identifier and an encryption parameter of the home device 01, and the encryption parameter is used by the home device 01 to perform key agreement with the configuration device 30.

A difference between step S510 and step S310 lies in that content of the broadcast frame sent by the home device 01 is different. Specifically, in step S310, the broadcast frame S1-3 sent by the home device 01 includes the device identifier of the home device 01. In step S510, in addition to the device identifier of the home device 01, the broadcast frame S1-4 sent by the home device 01 further includes the encryption parameter, and the encryption parameter is used by the home device 01 to perform key agreement with the configuration device 30.

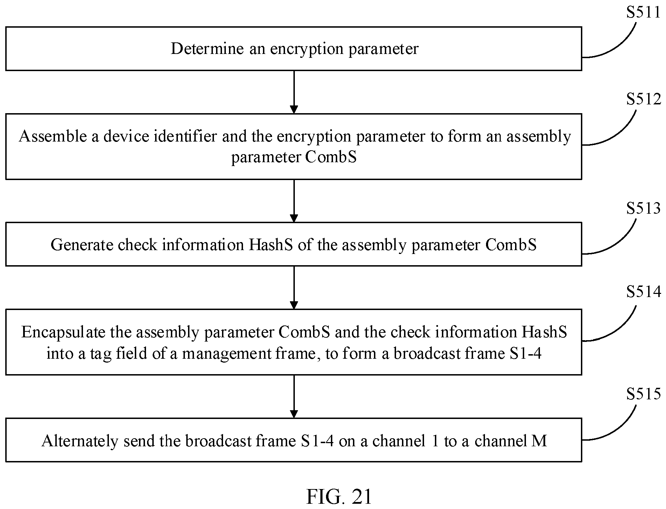

For example, as shown in FIG. 21, step S510 may include the following sub-steps.

S511: The home device 01 determines the encryption parameter. In some embodiments, the encryption parameter includes a public/private key pair (priKeyS, pubKeyS), a random salt Salt, and a random challenge value ChallengeS. The public/private key pair (priKeyS, pubKeyS) may be generated according to a public key algorithm, and the random salt Salt and the random challenge value ChallengeS may be generated according to a secure random number algorithm.

S512: The home device 01 assembles the device identifier and the encryption parameter to form an assembly parameter CombS. In some embodiments, the assembly parameter CombS includes the MAC address and the SN of the home device 01, the random challenge value ChallengeS, a public key pubKeyS, and the random salt Salt.

S513: The home device 01 generates check information HashS of the assembly parameter CombS. For example, the home device 01 performs a hash operation on the assembly parameter CombS, and an obtained hash value is the check information HashS. In some embodiments, the hash operation is a one-way hash algorithm, for example, an SHA256 algorithm.

S514: The home device 01 encapsulates the assembly parameter CombS and the check information HashS into a tag field of a management frame (for example, a probe request frame), to form the broadcast frame S1-4. In addition, a frame header part of the broadcast frame S1-4 may further include the MAC address of the home device.

S515: The home device alternately sends the broadcast frame S1-4 on the channel 1 to the channel M.

Other details of sending the broadcast frame S1-4 by the home device 01 that are not described herein are substantially the same as the manner in which the home device 01 sends the broadcast frame S1-3 in step S310. Therefore, reference may be made to the descriptions in step S310, and details are not described again.

S520: The configuration device 30 performs identity authentication on the home device based on the broadcast frame S1-4.

When the home device 01 sends the broadcast frame S1-4 on the current operating channel (for example, the channel 4) of the configuration device 30, the configuration device 30 may receive the broadcast frame S1-4. After receiving the broadcast frame S1-4, the configuration device 30 obtains the device identifier (for example, the MAC address or the SN) of the home device by parsing the broadcast frame S1-4, and performs identity authentication on the home device based on the device identifier. When the home device 01 passes the identity authentication performed by the configuration device 30, step S530 is further performed; or when the home device 01 does not pass the identity authentication performed by the configuration device 30, the configuration device 30 ignores the received broadcast frame S1-4, and does not respond to the broadcast frame S1-4.

Other details of performing identity authentication on the home device 01 by the configuration device 30 that are not described are substantially the same as those in step S320. Therefore, reference may be made to the descriptions in step S320, and details are not described again.

S530: The configuration device 30 sends the network configuration information M of the home local area network 60 to the home device 01 in the ciphertext manner, where the network configuration information M is used by the home device 01 to access the home local area network 60.

A difference between step S530 and step S330 lies in that in step S330, the configuration device 30 sends the network configuration information M to the home device 01 in the plaintext manner; and in step S530, the configuration device 30 sends the network configuration information M to the home device 01 in the ciphertext manner.

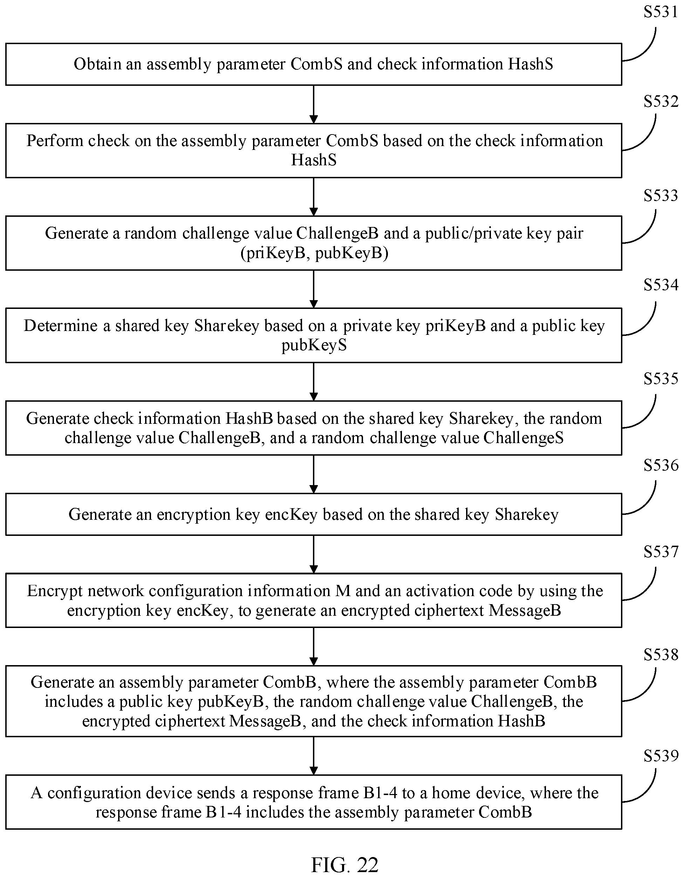

For example, as shown in FIG. 22, step S530 may include the following sub-steps.

S531: The configuration device 30 obtains the assembly parameter CombS and the check information HashS. Specifically, the configuration device 30 parses the broadcast frame S1-4 to obtain the assembly parameter CombS and the check information HashS that are carried in the broadcast frame S1-4.

S532: The configuration device 30 performs check on the assembly parameter CombS based on the check information HashS. Specifically, the configuration device 30 performs a hash operation (an algorithm of the hash operation is the same as the hash algorithm used in step S513) on the assembly parameter CombS, to obtain a hash value HashS'. If the hash value HashS' is the same as the hash value HashS obtained by parsing the broadcast frame S1-4, the check performed by the configuration device 30 on the assembled parameter CombS succeeds; or if the hash value HashS' is different from the hash value HashS obtained by parsing the broadcast frame S1-4, the check fails. When the configuration device 30 successfully checks the assembly parameter CombS, the configuration device 30 continues to perform step S533; or when the configuration device 30 does not successfully check the assembly parameter CombS, the configuration device 30 may suspend performing a subsequent step, and request the home device 01 to resend the broadcast frame S1-4.

S533: The configuration device 30 generates a random challenge value ChallengeB and a public/private key pair (priKeyB, pubKeyB). The public/private key pair (priKeyB, pubKeyB) may be generated according to a public key algorithm, and the random challenge value ChallengeB may be generated according to a secure random number algorithm.

S534: The configuration device 30 determines a shared key Sharekey based on a private key priKeyB and the public key pubKeyS. For example, Sharekey=Compute(priKeyB, pubKeyS). The algorithm Compute is a key agreement algorithm, for example, a SPEKE algorithm, a J-PAKE algorithm, or an ECDH algorithm.

S535: The configuration device 30 generates check information HashB based on the shared key Sharekey, the random challenge value ChallengeB, and the random challenge value ChallengeS. For example, HashB=HMAC(Sharekey, ChallengeB+ChallengeS), where HMAC is a digest algorithm, for example, an HMAC SHA256 algorithm.

S536: The configuration device 30 generates an encryption key encKey based on the shared key Sharekey. For example, encKey=HKDF(Sharekey, Salt, "key_info"), where HKDF is a key derivation algorithm, Salt is the random salt carried in the assembly parameter CombS, and "key_info" is a preset fixed character string.

S537: The configuration device 30 encrypts the network configuration information M and the activation code by using the encryption key encKey, to generate an encrypted ciphertext MessageB. For example, an encryption algorithm may be an AES-GCM algorithm.

S538: The configuration device 30 generates an assembly parameter CombB. The assembly parameter CombB includes a public key pubKeyB, the random challenge value ChallengeB, the encrypted ciphertext MessageB, and the check information HashB.

S539: The configuration device 30 sends a response frame B1-4 to the home device, where the response frame B1-4 includes the assembly parameter CombB. For example, the response frame B1-4 is a management frame like a probe response frame, and the assembled parameter CombB is located in a tag field of the response frame B1-4.

Other details of sending the network configuration information M to the home device 01 by the configuration device 30 that are not described are substantially the same as those in step S330. Therefore, reference may be made to the descriptions in step S330, and details are not described again.

S540: The home device 01 obtains the network configuration information M of the home local area network 60.

After receiving the response frame B1-4 sent by the configuration device 30, the home device 01 obtains the assembly parameter CombB by parsing the response frame B1-4, and decrypts the encrypted ciphertext MessageB in the assembly parameter CombB, to obtain the network configuration information M of the home local area network 60.

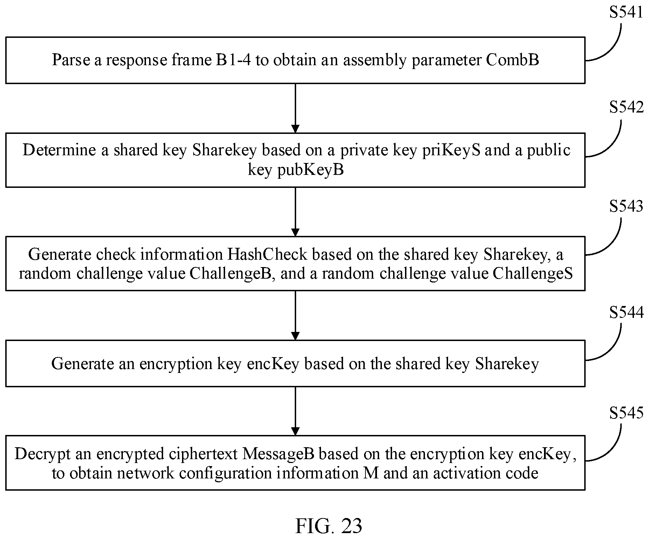

For example, as shown in FIG. 23, step S540 may include the following sub-steps.

S541: The home device 01 parses the response frame B1-4 to obtain the assembly parameter CombB. The assembly parameter CombB includes the public key pubKeyB, the random challenge value ChallengeB, the encrypted ciphertext MessageB, and the check information HashB.

S542: The home device 01 determines a shared key Sharekey based on a private key priKeyS and the public key pubKeyB. For example, Sharekey=Compute(priKeyS, pubKeyB). The algorithm Compute is a key agreement algorithm the same as that in step S534. According to a principle of the key agreement algorithm, the shared key Sharekey obtained by the home device 01 through calculation has a same value as the shared key Sharekey obtained by the configuration device 30 through calculation in step S534.

S543: The home device 01 generates check information HashCheck based on the shared key Sharekey, the random challenge value ChallengeB, and the random challenge value ChallengeS. For example, check information HashCheck=HMAC(Sharekey, ChallengeB+ChallengeS). It may be understood that the check information HashCheck generated by the home device has a same value as the check information HashB generated by the configuration device 30 in step S535.

S544: The home device 01 generates an encryption key encKey based on the shared key Sharekey. For example, the encryption key encKey=HKDF(Sharekey, Salt, "key_info"). It may be understood that the encryption key encKey obtained by the home device through calculation has a same value as the encryption key encKey generated by the configuration device 30 in step S536.

S545: The home device 01 decrypts the encrypted ciphertext MessageB based on the encryption key encKey, to obtain the network configuration information M and the activation code.

In this embodiment, the configuration device 30 sends the network configuration information M in the ciphertext form, so that the network configuration information M is not leaked and information security is improved. After obtaining the network configuration information M of the home local area network 60, the home device 01 may establish a connection to the AP device 10 based on the network configuration information M, to access the home local area network 60. For a process of establishing the connection between the home device 01 and the AP device 10, refer to the descriptions in step S410. Details are not described again.

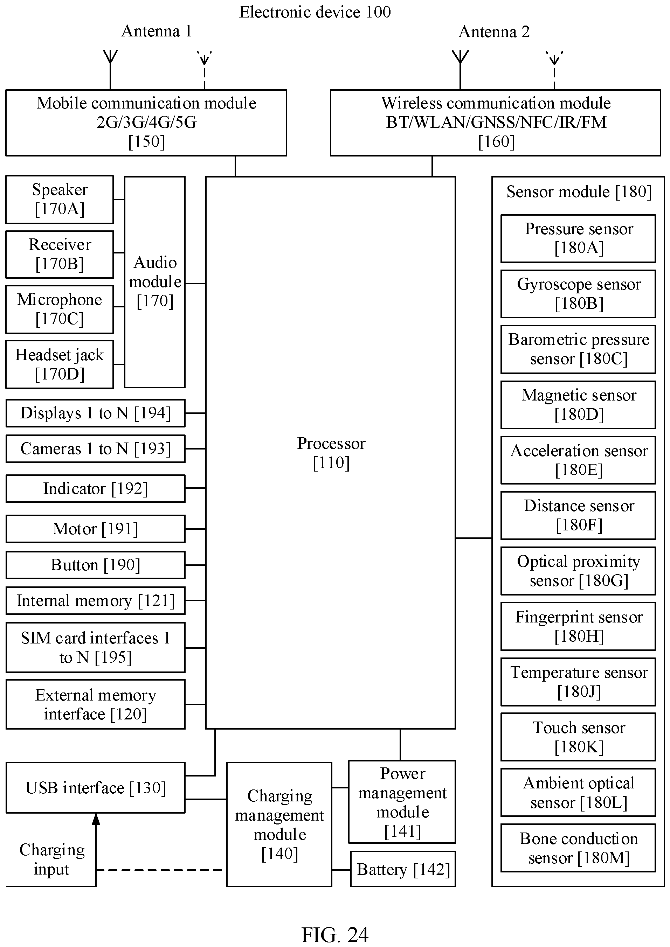

FIG. 24 is a diagram of a structure of an electronic device 100. The electronic device 100 may be implemented as a mobile device, a configuration device, or an IoT device. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient optical sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

The processor may generate an operation control signal based on an instruction operation code and a time sequence signal to control instruction fetching and instruction executing.

A memory may be further disposed in the processor 110, and is configured to store instructions and data. In some embodiments, the memory in the processor 110 is a cache. The memory can store instructions or data that has been used or cyclically used by the processor 110. If the processor 110 needs to use the instructions or the data again, the processor 110 may directly invoke the instructions or the data from the memory. This avoids repeated access, reduces a waiting time of the processor 110, and improves system efficiency.

In some embodiments, the processor 110 may include one or more interfaces. The interface may include an integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, and a subscriber identification module (subscriber identity module, SIM) interface.

The I2C interface is a bidirectional synchronous serial bus, including a serial data line (serial data line, SDA) and a serial clock line (derail clock line, SCL). In some embodiments, the processor 110 may include a plurality of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of I2S buses. The processor 110 may be coupled to the audio module 170 by using an I2S bus, to implement communication between the processor 110 and the audio module 170. The PCM interface may also be used for audio communication, and samples, quantizes, and encodes an analog signal. In some embodiments, the audio module 170 may be coupled to the wireless communication module 160 through a PCM bus interface. The UART interface is a universal serial data bus used for asynchronous communication. The bus may be a two-way communication bus. The bus converts data to be transmitted between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. The MIPI interface may be configured to connect the processor 110 to a peripheral device like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement an image shooting function of the electronic device 100. The processor 110 communicates with the display 194 through the DSI, to implement a display function of the electronic device 100.

The GPIO interface may be configured by using software. The GPIO interface may be configured as a control signal or a data signal. In some embodiments, the GPIO interface may be configured to connect the processor 110 to the camera 193, the display 194, the wireless communication module 160, the audio module 170, the sensor module 180, and the like. The GPIO interface may alternatively be configured as an I2C interface, an I2S interface, a UART interface, an MIPI interface, or the like.

It may be understood that an interface connection relationship between the modules shown in this embodiment of the present invention is merely used as an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

A USB connector 130 is a connector that complies with a USB standard specification, and may be configured to connect the electronic device 100 and a peripheral device. Specifically, the USB connector 130 may be a standard USB connector (for example, a Type C connector), a Mini USB connector, a Micro USB connector, or the like.

The charging management module 140 is configured to receive a charging input from the charger. The charger may be a wireless charger or a wired charger. In some embodiments of wired charging, the charging management module 140 may receive a charging input from a wired charger through the USB connector 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor a parameter such as a battery capacity, a quantity of battery cycles, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high-frequency signal. The demodulator is configured to demodulate a received electromagnetic wave signal into a low-frequency baseband signal. Then, the demodulator transfers the low-frequency baseband signal obtained through demodulation to the baseband processor for processing. After being processed by the baseband processor, the low-frequency baseband signal is transferred to the application processor. The application processor outputs a sound signal by using an audio device (which is not limited to the speaker 170A, the receiver 170B, or the like), or displays an image or a video by using the display 194. In some embodiments, the modem processor may be an independent device. In some other embodiments, the modem processor may be independent of the processor 110, and is disposed in a same device as the mobile communication module 150 or another functional module.

The wireless communication module 160 may provide a solution that is applied to the electronic device 100 and includes wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology.

The electronic device 100 implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, and the GPUs execute program instructions to generate or change display information.

The display 194 is configured to display an image, a video, and the like. The display 194 includes a display panel. In some embodiments, the electronic device 100 may include one or N displays 194, where N is a positive integer greater than 1.

The electronic device 100 may implement the image shooting function through the camera 193, the ISP, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of an image shooting scenario. In some embodiments, the ISP may be disposed in the camera 193.

The camera 193 is configured to capture a static image or a video. An optical image of an object is generated through the lens, and is projected to the photosensitive element. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into a standard image signal in a format like RGB or YUV. In some embodiments, the electronic device 100 may include one or N cameras 193, where N is a positive integer greater than 1.

The digital signal processor is configured to process a digital signal, and may process another digital signal in addition to a digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play or record videos in a plurality of encoding formats.

The NPU is a neural-network (neural-network, NN) computing processor, and simulates a biological neural network structure like a transmission mode between neurons in a human brain to perform rapid processing on input information, and can perform continuous self-learning. Applications such as intelligent cognition of the electronic device 100 may be implemented through the NPU, for example, image recognition, facial recognition, speech recognition, and text understanding.

The external memory interface 120 may be used to connect to an external storage card, for example, a micro SD card, to extend a storage capability of the electronic device 100. The external memory card communicates with the processor 110 through the external memory interface 120, to implement a data storage function. For example, a music file or a video file is stored in the external storage card.

The internal memory 121 may be configured to store computer-executable program code. The executable program code includes instructions. The internal memory 121 may include a program storage area and a data storage area. The program storage area may store an operating system, an application required by at least one function (for example, an image playing function) and the like. The data storage area may store data (such as audio data and an address book) created during use of the electronic device 100, and the like. In addition, the internal memory 121 may include a high-speed random access memory, or may include a nonvolatile memory, for example, at least one magnetic disk storage device and a flash memory. The processor 110 runs instructions stored in the internal memory 121 and/or instructions stored in the memory disposed in the processor, to perform various function applications and data processing of the electronic device 100.

The electronic device 100 may implement an audio function by using the audio module 170, the speaker 170A, the receiver 170B, the microphone 170C, the headset jack 170D, the application processor, and the like, for example, music playing and recording.

The audio module 170 is configured to convert digital audio information into an analog audio signal for output, and is further configured to convert an analog audio input into a digital audio signal. The audio module 170 may be further configured to code and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function.

The headset jack 170D is configured to connect to a wired headset.

The pressure sensor 180A is configured to sense a pressure signal, and can convert the pressure signal into an electrical signal.

The gyroscope sensor 180B may be configured to determine a motion posture of the electronic device 100. In some embodiments, an angular velocity of the electronic device 100 around three axes (namely, axes x, y, and z) may be determined through the gyroscope sensor 180B. The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall sensor.

The acceleration sensor 180E may detect accelerations in various directions (usually on three axes) of the electronic device 100. When the electronic device 100 is static, a magnitude and a direction of gravity may be detected. The acceleration sensor may be further configured to identify a posture of the electronic device, and is used in an application like switching between a landscape mode and a portrait mode or a pedometer.

The distance sensor 180F is configured to measure a distance. The electronic device 100 may measure the distance in an infrared manner or a laser manner. In some embodiments, in an image shooting scenario, the electronic device 100 may measure a distance through the distance sensor 180F to implement quick focusing.

The optical proximity sensor 180G may include, for example, a light emitting diode (LED) and an optical detector, for example, a photodiode.

The ambient optical sensor 180L is configured to sense ambient light brightness.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature.

The touch sensor 180K is also referred to as a "touch device". The touch sensor 180K may be disposed in the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of a touch event.

The bone conduction sensor 180M may obtain a vibration signal. In some embodiments, the bone conduction sensor 180M may obtain a vibration signal of a vibration bone of a human vocal-cord part. The bone conduction sensor 180M may further be in contact with a human pulse, to receive a blood pressure beating signal.

The button 190 includes a power button, a volume button, and the like. The button 190 may be a mechanical button, or may be a touch button. The electronic device 100 may receive a key input, and generate a key signal input related to a user setting and function control of the electronic device 100.

The motor 191 may generate a vibration prompt. The indicator 192 may be an indicator light, and may be configured to indicate a charging status and a power change, or may be configured to indicate a message, a missed call, a notification, or the like.

The SIM card interface 195 is configured to connect to a SIM card.

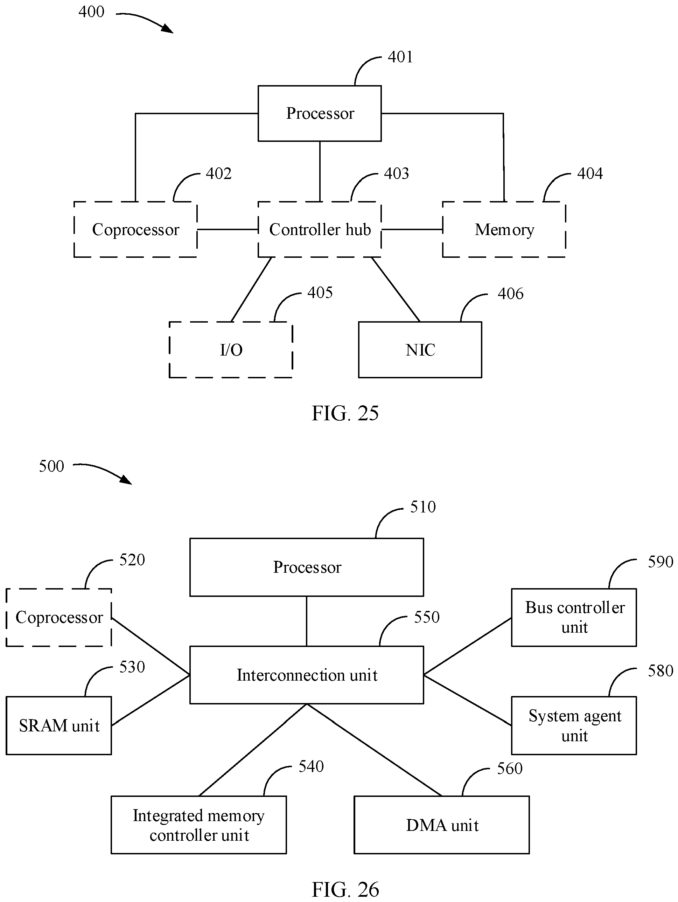

FIG. 25 shows a block diagram of an electronic device 400 according to an embodiment of this application. The electronic device 400 may include one or more processors 401 coupled to a controller hub 403. For at least one embodiment, the controller hub 403 communicates with the processor 401 through a multi-branch bus like a front side bus (Front Side Bus, FSB), a point-to-point interface like a QuickPath interconnect (QuickPath Interconnect, QPI) interface, or a similar connection 406. The processor 401 executes instructions for controlling a general type of data processing operations. In an embodiment, the controller hub 403 includes, but is not limited to, a graphics and memory controller hub (Graphics & Memory Controller Hub, GMCH) (not shown) and an input output hub (Input Output Hub, IOH) (which may be on separate chips) (not shown). The GMCH includes a memory controller and a graphics controller and is coupled to the IOH.

The electronic device 400 may further include a coprocessor 402 and a memory 404 that are coupled to the controller hub 403. Alternatively, one or both of the memory and the GMCH may be integrated into the processor (as described in this application). The memory 404 and the coprocessor 402 are directly coupled to the processor 401 and the controller hub 403. The controller hub 403 and the IOH are located in a single chip.

The memory 404 may be, for example, a dynamic random access memory (Dynamic Random Access Memory, DRAM), a phase change memory (Phase Change Memory, PCM), or a combination thereof. The memory 404 may include one or more tangible and non-transitory computer-readable media for storing data and/or instructions. The computer-readable storage medium stores instructions, and specifically, stores temporary and permanent copies of the instructions.

The electronic device 400 shown in FIG. 25 may be implemented as a mobile device, a configuration device, and an IoT device. When the electronic device 400 is implemented as the mobile device, instructions stored in the memory 404 may include instructions that cause, when being executed by at least one of the processors, the mobile device to perform the steps performed by the mobile device in the methods shown in FIG. 9A and FIG. 9B, FIG. 17, FIG. 20, FIG. 21, FIG. 22, and FIG. 23.

When the electronic device 400 is implemented as the configuration device, the instructions stored in the memory 404 may include instructions that cause, when being executed by at least one of the processors, the configuration device to perform the steps performed by the configuration device in the methods shown in FIG. 9A and FIG. 9B, FIG. 17, FIG. 20, FIG. 21, FIG. 22, and FIG. 23.

When the electronic device 400 is implemented as the IoT device, the instructions stored in the memory 404 may include instructions that cause, when being executed by at least one of the processors, the IoT device to perform the steps performed by the home device in the methods shown in FIG. 9A and FIG. 9B, FIG. 17, FIG. 20, FIG. 21, FIG. 22, and FIG. 23.

In an embodiment, the coprocessor 402 is a dedicated processor, for example, a high-throughput many integrated core (Many Integrated Core, MIC) processor, a network or communication processor, a compression engine, a graphics processing unit, general-purpose computing on graphics processing units (General-purpose computing on graphics processing units, GPGPU), or an embedded processor. An optional property of the coprocessor 402 is shown by a dashed line in FIG. 25.

In an embodiment, the electronic device 400 may further include a network interface (Network Interface Controller, NIC) 406. The network interface 406 may include a transceiver, configured to provide a radio interface for the electronic device 400, to communicate with any another suitable device (such as a front-end module or an antenna). In various embodiments, the network interface 406 may be integrated with another component of the electronic device 400. The network interface 406 may implement a function of the communications unit in the foregoing embodiment.

The electronic device 400 may further include an input/output (Input/Output, I/O) device 405. The I/O 405 may include: a user interface designed to enable a user to interact with the electronic device 400; a peripheral component interface designed to enable a peripheral component to interact with the electronic device 400; and/or a sensor designed to determine an environmental condition and/or location information related to the electronic device 400.

It should be noted that FIG. 25 is merely an example. To be specific, although FIG. 25 shows that the electronic device 400 includes a plurality of devices such as the processor 401, the controller hub 403, and the memory 404, in actual application, a device using the methods in this application may include only some of the devices of the electronic device 400, for example, may only include the processor 401 and the network interface 406. In FIG. 25, properties of the optional devices are shown by using dashed lines.

FIG. 26 shows a block diagram of a system on chip (System on Chip, SoC) 500 according to an embodiment of this application. In FIG. 26, similar components have a same reference numeral. In addition, a dashed-line box is an optional feature of a more advanced SoC. In FIG. 26, the SoC 500 includes an interconnection unit 550 coupled to a processor 510; a system agent unit 580; a bus controller unit 590; an integrated memory controller unit 540; one group of or one or more coprocessors 520, which may include integrated graphics logic, an image processor, an audio processor, and a video processor; a static random access memory (Static Random Access Memory, SRAM) unit 530; and a direct memory access (Direct Memory Access, DMA) unit 560. In an embodiment, the coprocessor 520 includes a dedicated processor, for example, a network or communication processor, a compression engine, general-purpose computing on graphics processing units (General-purpose computing on graphics processing units, GPGPU), a high throughput MIC processor, or an embedded processor.

The static random access memory unit 530 may include one or more tangible, non-transitory computer-readable media for storing data and/or instructions. The computer-readable storage medium stores instructions, and specifically, stores temporary and permanent copies of the instructions.

The SoC shown in FIG. 26 may be separately disposed in a mobile device, a configuration device, and an IoT device. When the SoC is disposed in the mobile device, the static random access memory unit 530 stores instructions, and the instructions may include instructions that cause, when being executed by at least one of the processors, the mobile device to perform the steps performed by the mobile device in the methods shown in FIG. 9A and FIG. 9B, FIG. 17, FIG. 20, FIG. 21, FIG. 22, and FIG. 23.

When the SoC is disposed in the configuration device, the static random access memory unit 530 stores instructions, and the instructions may include instructions that cause, when being executed by at least one of the processors, the configuration device to perform the steps performed by the configuration in the methods shown in FIG. 9A and FIG. 9B, FIG. 17, FIG. 20, FIG. 21, FIG. 22, and FIG. 23.

When the SoC is disposed in the IoT device, the static random access memory unit 530 stores instructions, and the instructions may include instructions that cause, when being executed by at least one of the processors, the IoT device to perform the steps performed by the household in the methods shown in FIG. 9A and FIG. 9B, FIG. 17, FIG. 20, FIG. 21, FIG. 22, and FIG. 23.

A term "and/or" in this specification describes only an association relationship between associated objects and indicates that there may be three relationships. For example, A and/or B may represent the following three cases: Only A exists, both A and B exist, and only B exists.

All method implementations of this application may be implemented by software, a magnetic component, firmware, or the like.

Program code may be used to input instructions, to perform functions described in this specification and generate output information. The output information may be used in one or more output devices in a known manner. For a purpose of this application, a processing system includes any system that has a processor, for example, a digital signal processor (Digital Signal Processor, DSP), a microcontroller, an application-specific integrated circuit (ASIC), or a microprocessor.

The program code may be implemented in a high-level programming language or an object-oriented programming language to communicate with the processing system. The program code can alternatively be implemented in an assembly language or a machine language when needed. Actually, the mechanism described in this specification is not limited to a scope of any particular programming language. In either case, the language may be a compiled language or an interpreted language.

One or more aspects of at least one embodiment may be implemented by using representative instructions stored in a computer-readable storage medium. The instructions represent various logics in a processor, and when the instructions are read by a machine, the machine is enabled to manufacture logic for performing the technologies described in this specification. These representations, referred to as an "intellectual property (Intellectual Property, IP) core" may be stored on a tangible computer-readable storage medium and provided to a plurality of customers or production facilities to load into a manufacturing machine that actually manufactures the logic or processor.

In some cases, an instruction converter may be configured to convert instructions from a source instruction set to a target instruction set. For example, the instruction converter may convert, in a transform (for example, a static binary transform, or a dynamic binary transform including dynamic compilation), morphing, emulation, or another manner, the instructions into one or more other instructions processed by a core. The instruction converter may be implemented by software, hardware, firmware, or a combination thereof. The instruction converter may be located on the processor, outside the processor, or partially on the processor and partially outside the processor.

## Claims

1. A wireless local area network access method, applied to a system comprising a mobile device, a configuration device, and at least one IoT device, wherein the at least one IoT device comprises a first IoT device, and the method comprises:
determining, by the configuration device, a device trustlist, wherein the device trustlist comprises device identifiers of one or more IoT devices;
sending, by the first IoT device, at least one broadcast frame in an access point AP mode, wherein the at least one broadcast frame comprises a first broadcast frame, and the first broadcast frame comprises a first network identifier of a wireless local area network provided by the first IoT device;
receiving, by the mobile device, the first broadcast frame, and sending a reply frame for the first broadcast frame to the first IoT device;
switching, by the first IoT device, from the AP mode to a station STA mode in response to receiving the reply frame;
sending, by the first IoT device, a second broadcast frame on at least one wireless channel, wherein the second broadcast frame comprises a device identifier of the first IoT device, and the at least one wireless channel comprises an operating channel of the configuration device; and
receiving, by the configuration device, the second broadcast frame, determining, based on the second broadcast frame, that the device identifier of the first IoT device matches the device trustlist, and providing, for the first IoT device, network configuration information of a wireless local area network in which the configuration device is located, wherein the network configuration information is used by the first IoT device to access the wireless local area network.

2. The method according to claim 1, wherein the at least one IoT device further comprises a second IoT device; and
the method further comprises:
sending, by the second IoT device, a third broadcast frame in the AP mode, wherein the third broadcast frame comprises a first network identifier of a wireless local area network provided by the second IoT device;
receiving, by the first IoT device that has switched to the STA mode, the third broadcast frame; and
sending, by the first IoT device, a reply frame for the third broadcast frame to the second IoT device, wherein the reply frame that is sent by the first IoT device and that is for the third broadcast frame is used to trigger the second IoT device to switch from the AP mode to the STA mode.

3. The method according to claim 1 or 2, wherein the first network identifier is a character string named according to a first rule, and the first network identifier comprises a random character.

4. The method according to claim 3, wherein the at least one broadcast frame further comprises a fourth broadcast frame, the fourth broadcast frame comprises a second network identifier of the wireless local area network provided by the first IoT device, the second network identifier is a character string named according to a second rule, and the second network identifier is used by the first IoT device to access the wireless local area network in a soft access point SoftAP manner.

5. The method according to claim 1, wherein the reply frame that is sent by the mobile device and that is for the first broadcast frame comprises a first packet, and the first packet is a packet determined based on the first network identifier.

6. The method according to claim 1, wherein the determining, by the configuration device, a device trustlist comprises:
receiving, by the configuration device, the device identifiers of the one or more IoT devices that are sent by the mobile device, and determining the device trustlist based on the received device identifiers.

7. The method according to claim 1, wherein the first broadcast frame is a beacon beacon frame; and/or
the network configuration information of the wireless local area network comprises a network identifier SSID of the wireless local area network; and/or
the device identifier of the IoT device comprises a MAC address of the IoT device.

8. A wireless local area network access method, applied to a first IoT device, wherein the method comprises:
sending at least one broadcast frame in an access point AP mode, wherein the at least one broadcast frame comprises a first broadcast frame, and the first broadcast frame comprises a first network identifier of a wireless local area network provided by the first IoT device;
receiving a reply frame for the first broadcast frame from a mobile device, and switching from the AP mode to a station STA mode;
sending a second broadcast frame on at least one wireless channel, wherein the second broadcast frame comprises a device identifier of the first IoT device, and the at least one wireless channel comprises an operating channel of a configuration device; and
receiving, from the configuration device, network configuration information that is in response to the second broadcast frame, wherein the network configuration information is used by the first IoT device to access a wireless local area network in which the configuration device is located.

9. The method according to claim 8, wherein the method further comprises:
receiving, by the first IoT device that has switched to the STA mode, a third broadcast frame sent by a second IoT device in the AP mode, wherein the third broadcast frame comprises a first network identifier of a network provided by the second IoT device; and
sending a reply frame for the third broadcast frame to the second IoT device, wherein the reply frame that is sent by the first IoT device and that is for the third broadcast frame is used to trigger the second IoT device to switch from the AP mode to the STA mode.

10. The method according to claim 8 or 9, wherein the first network identifier is a character string named according to a first rule, and the first network identifier comprises a random character.

11. The method according to claim 10, wherein the at least one broadcast frame comprises a fourth broadcast frame, the fourth broadcast frame comprises a second network identifier of the wireless local area network provided by the first IoT device, the second network identifier is a character string named according to a second rule, and the second network identifier is used by the first IoT device to access the wireless local area network in a soft access point SoftAP manner.

12. A wireless local area network access method, applied to a configuration device, wherein the method comprises:
determining a device trustlist, wherein the device trustlist comprises device identifiers of one or more IoT devices;
receiving a second broadcast frame from a first IoT device, wherein the second broadcast frame comprises a device identifier of the first IoT device; and
determining, based on the second broadcast frame, that the device identifier of the first IoT device matches the device trustlist, and providing, for the first IoT device, network configuration information of a wireless local area network in which the configuration device is located, wherein the network configuration information is used by the first IoT device to access the wireless local area network.

13. A wireless local area network system, wherein the system comprises a mobile device, a configuration device, and at least one IoT device, and the at least one IoT device comprises a first IoT device, wherein
the mobile device is configured to perform the steps performed by the mobile device in the method according to any one of claims 1 to 7, the configuration device is configured to perform the steps performed by the configuration device in the method according to any one of claims 1 to 7, and the first IoT device is configured to perform the steps performed by the first IoT device in the method according to any one of claims 1 to 7.

14. An electronic device, comprising:
a memory, configured to store instructions for execution by one or more processors of the electronic device; and
a processor, configured to execute the instructions in the memory, so that the electronic device performs the method according to any one of claims 8 to 12.

15. A computer-readable storage medium, wherein the computer-readable storage medium stores instructions, and when the instructions are executed on a computer, the computer is enabled to perform the method according to any one of claims 1 to 12.
